# EUROPEAN PATENT APPLICATION

(11) **EP 4 676 081 A1**
(43) Date of publication of application: **07.01.2026**
(21) Application number: 24795758.2
(22) Date of filing: 29.03.2024
(51) Int. Cl.: H04Q 11/00

(54) **OPTICAL COMMUNICATION METHOD, MASTER DEVICE AND SLAVE DEVICE**

(30) Priority: 24.04.2023 CN 202310472296; 27.06.2023 CN 202310769519
(71) Applicant: Huawei Technologies Co., Ltd., Shenzhen, Guangdong 518129 (CN)
(72) Inventor: SUN, Yanbin, Shenzhen, Guangdong 518129 (CN); WANG, Xiang, Shenzhen, Guangdong 518129 (CN); WANG, Wenming, Shenzhen, Guangdong 518129 (CN)
(74) Representative: Maiwald GmbH
(86) International application number: PCT/CN2024/084731
(87) International publication number: WO 2024/222377

(57) **Abstract**

This application provides an optical communication method, applied to the field of optical communication. The optical communication method includes: A main device receives a first uplink optical signal from a first sub device; the main device converts the first uplink optical signal into a first uplink electrical signal; the main device performs uplink related processing on the first uplink electrical signal to obtain a first service packet, where the uplink related processing includes first uplink related processing of a medium access control MAC layer; and the main device outputs the first service packet. In the technical solutions provided in this application, related processing of the MAC layer in the sub device is moved up to the main device, so that manufacturing costs of the sub device and manufacturing costs of an optical communication system are reduced.

## Description

This application claims priorities to Chinese Patent Application No. CN202310472296.6, filed with the China National Intellectual Property Administration on April 24, 2023, and entitled "OPTICAL COMMUNICATION SYSTEM, OPTICAL COMMUNICATION METHOD, SUB DEVICE, AND MAIN DEVICE", and to Chinese Patent Application No. CN202310769519.5, filed with the China National Intellectual Property Administration on June 27, 2023, and entitled "OPTICAL COMMUNICATION METHOD, MAIN DEVICE, AND SUB DEVICE", both of which are incorporated herein by reference in their entireties.

### TECHNICAL FIELD

This application relates to the field of optical communication, and in particular, to an optical communication method, a main device, and a sub device.

### BACKGROUND

A passive optical network (passive optical network, PON) includes an optical line terminal (optical line terminal, OLT), an optical distribution network (optical distribution network, ODN), and a plurality of main optical network units (optical network unit, ONU). Each main ONU may be connected to a plurality of sub ONUs through an optical splitter. In an uplink direction, a sub ONU receives an uplink wireless signal from a station (station, STA), converts the uplink wireless signal into an analog signal by using a radio frequency unit, and then converts the analog signal into a digital signal. Then, the sub ONU performs related processing of a physical layer and a medium access control (medium access control, MAC) layer on the signal, to obtain a service packet. The sub ONU converts the service packet into an uplink optical signal by using a photoelectric conversion unit, and transmits the uplink optical signal to the main ONU through the optical splitter. The main ONU is configured to demodulate the uplink optical signal by using the photoelectric conversion unit, to obtain the service packet, and transmit the service packet to the OLT through the ODN. The OLT is configured to send the service packet to a public network.

In actual application, manufacturing costs of the sub ONU are high, resulting in high manufacturing costs of the PON.

### SUMMARY

This application provides an optical communication method, a main device, and a sub device. Related processing of a MAC layer in the sub device is moved up to the main device, so that costs of the sub device can be reduced, thereby reducing costs of an optical communication system.

A first aspect of this application provides an optical communication method. The optical communication method includes the following steps: A main device receives a first uplink optical signal from a first sub device; the main device converts the first uplink optical signal into a first uplink electrical signal; the main device performs uplink related processing on the first uplink electrical signal to obtain a first service packet, where the uplink related processing includes first uplink related processing of a MAC layer; and the main device outputs the first service packet. In this application, unless otherwise specified, the MAC layer or a physical layer is a MAC layer or a physical layer related to a wireless protocol, for example, a Wi-Fi MAC layer or a Wi-Fi physical layer. Similarly, unless otherwise specified, uplink/downlink related processing of the MAC layer refers to uplink/downlink processing of the MAC layer in the wireless protocol, and uplink/downlink related processing of the physical layer refers to uplink/downlink related processing of the physical layer in the wireless protocol.

In an optional manner of the first aspect, the first uplink electrical signal is a digital in-phase/quadrature I/Q signal. The uplink related processing performed by the main device on the first uplink electrical signal further includes second uplink related processing of the physical layer, first uplink related processing of the physical layer, and second uplink related processing of the MAC layer. The second uplink related processing of the physical layer, the first uplink related processing of the physical layer, and the second uplink related processing of the MAC layer are moved up to the main device, so that costs of the sub device can be further reduced.

In an optional manner of the first aspect, the uplink related processing performed by the main device on the first uplink electrical signal further includes first uplink related processing of the physical layer and second uplink related processing of the MAC layer. The first uplink related processing of the physical layer and the second uplink related processing of the MAC layer are moved up to the main device, so that costs of the sub device can be further reduced.

In an optional manner of the first aspect, the uplink related processing performed by the main device on the first uplink electrical signal further includes second uplink related processing of the MAC layer. The second uplink related processing of the MAC layer is moved up to the main device, so that costs of the sub device can be further reduced.

In an optional manner of the first aspect, the optical communication method further includes the following step: The main device sends incremental signaling to the first sub device. The incremental signaling includes a frame identifier and information about a variable field. The frame identifier is used by the first sub device to obtain a first fixed field set based on a first mapping relationship. The first mapping relationship includes a mapping relationship between a plurality of frame identifiers and a plurality of fixed field sets. The variable field is used by the first sub device to obtain a first control frame based on the variable field and the first fixed field set. In this application, the incremental signaling is transmitted, so that transmission resources between the first sub device and the main device can be saved.

In an optional manner of the first aspect, the optical communication method further includes the following steps: The main device performs downlink related processing on a second service packet to obtain a first downlink electrical signal, where the downlink related processing includes first downlink related processing of the MAC layer; the main device converts the first downlink electrical signal into a first downlink optical signal; and the main device transmits the first downlink optical signal to the first sub device. The first downlink related processing of the MAC layer is moved up to the main device, so that costs of the sub device can be further reduced.

In an optional manner of the first aspect, the downlink related processing performed by the main device on the second service packet further includes second downlink related processing of the MAC layer, first downlink related processing of the physical layer, and second downlink related processing of the physical layer. The first downlink related processing of the physical layer, the second downlink related processing of the physical layer, and the second downlink related processing of the MAC layer are moved up to the main device, so that costs of the sub device can be further reduced.

In an optional manner of the first aspect, the downlink related processing performed by the main device on the second service packet further includes second downlink related processing of the MAC layer and first downlink related processing of the physical layer. The first downlink related processing of the physical layer and the second downlink related processing of the MAC layer are moved up to the main device, so that costs of the sub device can be further reduced.

In an optional manner of the first aspect, the downlink related processing performed by the main device on the second service packet further includes second downlink related processing of the MAC layer. The second downlink related processing of the MAC layer is moved up to the main device, so that costs of the sub device can be further reduced.

In an optional manner of the first aspect, the main device is connected to the first sub device through an optical splitter.

In an optional manner of the first aspect, the main device is connected to a second sub device through an optical splitter.

In an optional manner of the first aspect, the optical communication method further includes the following steps: The main device receives a second uplink optical signal from the second sub device; the main device converts the second uplink optical signal into a second uplink electrical signal; and the main device performs the uplink related processing on the second uplink electrical signal to obtain a third service packet.

In an optional manner of the first aspect, the optical communication method further includes the following steps: The main device receives a fourth service packet; the main device performs the downlink related processing on the fourth service packet to obtain a second downlink electrical signal; and the main device converts the second downlink electrical signal into a second downlink optical signal, and transmits the second downlink optical signal to the second sub device.

In an optional manner of the first aspect, the optical communication method further includes the following steps: The main device allocates a first uplink slot to the first sub device, and allocates a second uplink slot to the second sub device, where the first uplink slot is different from the second uplink slot; the main device receives the first uplink optical signal from the first sub device in the first uplink slot; and the main device receives the second uplink optical signal from the second sub device in the second uplink slot.

A second aspect of this application provides an optical communication method. The optical communication method includes the following steps: A first sub device receives a first uplink wireless signal from a station STA. The first sub device obtains a first uplink electrical signal based on the first uplink wireless signal. The first sub device converts the first uplink electrical signal into a first uplink optical signal. The first sub device transmits the first uplink optical signal to a main device. The main device performs uplink related processing on the first uplink optical signal to obtain a first service packet. The uplink related processing of the main device includes first uplink related processing of a MAC layer.

In an optional manner of the second aspect, the first uplink electrical signal is a digital I/Q signal.

In an optional manner of the second aspect, the first uplink related processing of the MAC layer includes aggregation-medium access control protocol data unit (aggregation-medium access control protocol data unit, A-MPDU) parsing and cyclic redundancy check (cyclic redundancy check, CRC). Second uplink related processing of the MAC layer further includes acknowledgment (acknowledge, ACK) or block acknowledgment (block acknowledgement, BA). The first uplink related processing of the MAC layer includes aggregation-medium access control service data unit (aggregation-medium access control service data unit, A-MSDU) parsing. Related processing that affects a delay of the STA is retained in the sub device, so that the delay of the STA can be reduced.

In an optional manner of the second aspect, the first sub device converts the first uplink wireless signal into an electrical signal, and performs second uplink related processing of a physical layer on the electrical signal, to obtain the first uplink electrical signal.

In an optional manner of the second aspect, the second uplink related processing of the physical layer includes at least one of uplink related processing of the physical layer. The uplink related processing of the physical layer includes synchronization, fast Fourier transform (fast Fourier transform, FFT), constellation mapping, descrambling, and restoring a medium access control protocol data unit (medium access control protocol data unit, MPDU).

In an optional manner of the second aspect, the first sub device converts the first uplink wireless signal into an electrical signal, and performs second uplink related processing of a physical layer and first uplink related processing of the physical layer on the electrical signal in sequence, to obtain the first uplink electrical signal.

In an optional manner of the second aspect, the first uplink related processing of the physical layer includes a first subset of uplink related processing of the physical layer. The second uplink related processing of the physical layer includes a second subset of the uplink related processing of the physical layer. The uplink related processing of the physical layer includes synchronization, FFT, constellation mapping, descrambling, and restoring a medium access control protocol data unit MPDU. The first subset is different from the second subset.

In an optional manner of the second aspect, the first sub device converts the first uplink wireless signal into an electrical signal, and performs second uplink related processing of a physical layer, first uplink related processing of the physical layer, and second uplink related processing of the MAC layer on the electrical signal in sequence, to obtain the first uplink electrical signal.

In an optional manner of the second aspect, the first uplink related processing of the MAC layer includes a first subset of uplink related processing of the MAC layer. The second uplink related processing of the MAC layer includes a second subset of the uplink related processing of the MAC layer. The uplink related processing of the MAC layer includes A-MPDU parsing, CRC, ACK or block acknowledgment BA, and A-MSDU parsing. The first subset is different from the second subset.

In an optional manner of the second aspect, the optical communication method further includes the following steps: The first sub device receives incremental signaling from the main device, where the incremental signaling includes a frame identifier and information about a variable field; the first sub device obtains a first fixed field set based on the frame identifier and a first mapping relationship, where the first mapping relationship includes a mapping relationship between a plurality of frame identifiers and a plurality of fixed field sets; the first sub device obtains a first control frame based on the variable field and the first fixed field set; and the first sub device sends the first control frame to the STA.

In an optional manner of the second aspect, a frame format of the first control frame complies with a specification in the 802.11 protocol.

In an optional manner of the second aspect, the first control frame is an acknowledgment ACK frame. The frame identifier indicates that a type of the first control frame is the ACK frame. The information about the variable field includes at least one of the following information: information about a duration field, a destination address field, a frame check sequence field, a more fragments flag field, a retry flag, and an extension field. The first fixed field set includes at least one of the following information: information about a to distributed system flag, a from distributed system flag, a power management flag, and a protected field.

In an optional manner of the second aspect, the optical communication method further includes the following steps: The first sub device receives the first downlink optical signal from the main device; the first sub device converts the first downlink optical signal into a first downlink electrical signal, where the first downlink electrical signal is obtained after the main device performs downlink related processing on a second service packet, and the downlink related processing includes first downlink related processing of the MAC layer; the first sub device obtains a first downlink wireless signal based on the first downlink electrical signal; and the first sub device sends the first downlink wireless signal to the STA.

In an optional manner of the second aspect, the first sub device performs second downlink related processing of the physical layer on the first downlink electrical signal, and obtains the first downlink wireless signal based on a processed electrical signal.

In an optional manner of the second aspect, the first sub device performs first downlink related processing of the physical layer and second downlink related processing of the physical layer on the first downlink electrical signal in sequence, and obtains the first downlink wireless signal based on a processed electrical signal.

In an optional manner of the second aspect, the first sub device performs second downlink related processing of the MAC layer, first downlink related processing of the physical layer, and second downlink related processing of the physical layer on the first downlink electrical signal in sequence, and obtains the first downlink wireless signal based on a processed electrical signal.

A third aspect of this application provides a main device. The main device includes a photoelectric conversion unit and a processor. The photoelectric conversion unit is configured to receive a first uplink optical signal from a first sub device, and convert the first uplink optical signal into a first uplink electrical signal. The processor is configured to perform uplink related processing on the first uplink electrical signal to obtain a first service packet. The uplink related processing includes first uplink related processing of a MAC layer. The processor is further configured to output the first service packet.

In an optional manner of the third aspect, the first uplink electrical signal is a digital I/Q signal.

In an optional manner of the third aspect, the uplink related processing performed by the main device on the first uplink electrical signal further includes second uplink related processing of a physical layer, first uplink related processing of the physical layer, and second uplink related processing of the MAC layer.

In an optional manner of the third aspect, the uplink related processing performed by the main device on the first uplink electrical signal further includes first uplink related processing of a physical layer and second uplink related processing of the MAC layer.

In an optional manner of the third aspect, the uplink related processing performed by the main device on the first uplink electrical signal further includes second uplink related processing of the MAC layer.

In an optional manner of the third aspect, the photoelectric conversion unit is further configured to send incremental signaling to the first sub device. The incremental signaling includes a frame identifier and information about a variable field. The frame identifier is used by the first sub device to obtain a first fixed field set based on a first mapping relationship. The first mapping relationship includes a mapping relationship between a plurality of frame identifiers and a plurality of fixed field sets. The variable field is used by the first sub device to obtain a first control frame based on the variable field and the first fixed field set.

In an optional manner of the third aspect, the processor is further configured to perform downlink related processing on a second service packet to obtain a first downlink electrical signal. The downlink related processing includes first downlink related processing of the MAC layer. The photoelectric conversion unit is further configured to convert the first downlink electrical signal into a first downlink optical signal, and transmit the first downlink optical signal to the first sub device.

In an optional manner of the third aspect, the downlink related processing performed by the main device on the second service packet further includes second downlink related processing of the MAC layer, first downlink related processing of the physical layer, and second downlink related processing of the physical layer.

In an optional manner of the third aspect, the downlink related processing performed by the main device on the second service packet further includes second downlink related processing of the MAC layer and first downlink related processing of the physical layer.

In an optional manner of the third aspect, the downlink related processing performed by the main device on the second service packet further includes second downlink related processing of the MAC layer.

In an optional manner of the third aspect, the main device is connected to a second sub device through an optical splitter.

In an optional manner of the third aspect, the photoelectric conversion unit is further configured to receive a second uplink optical signal from the second sub device. The photoelectric conversion unit is further configured to convert the second uplink optical signal into a second uplink electrical signal. The processor is further configured to perform the uplink related processing on the second uplink electrical signal to obtain a third service packet.

In an optional manner of the third aspect, the photoelectric conversion unit is further configured to receive a fourth service packet. The processor is further configured to perform the downlink related processing on the fourth service packet to obtain a second downlink electrical signal. The photoelectric conversion unit is further configured to convert the second downlink electrical signal into a second downlink optical signal, and transmit the second downlink optical signal to the second sub device.

In an optional manner of the third aspect, the processor is further configured to allocate a first uplink slot to the first sub device, and allocate a second uplink slot to the second sub device. The first uplink slot is different from the second uplink slot. The photoelectric conversion unit is configured to receive the first uplink optical signal from the first sub device in the first uplink slot. The photoelectric conversion unit is configured to receive the second uplink optical signal from the second sub device in the second uplink slot.

A fourth aspect of this application provides a sub device. The sub device includes a wireless module and a photoelectric conversion unit. The wireless module is configured to receive a first uplink wireless signal from a STA, and obtain a first uplink electrical signal based on the first uplink wireless signal. The photoelectric conversion unit is configured to convert the first uplink electrical signal into a first uplink optical signal, and transmit the first uplink optical signal to a main device. The main device performs uplink related processing on the first uplink optical signal to obtain a first service packet. The uplink related processing of the main device includes first uplink related processing of a MAC layer.

In an optional manner of the fourth aspect, the first uplink electrical signal is a digital I/Q signal.

In an optional manner of the fourth aspect, the first uplink related processing of the MAC layer includes one or more of the following: A-MPDU parsing, CRC, ACK, block acknowledgment BA, and A-MSDU parsing.

In an optional manner of the fourth aspect, the wireless module is configured to convert the first uplink wireless signal into an electrical signal, and perform second uplink related processing of a physical layer on the electrical signal, to obtain the first uplink electrical signal.

In an optional manner of the fourth aspect, the second uplink related processing of the physical layer includes at least one of uplink related processing of the physical layer. The uplink related processing of the physical layer includes synchronization, FFT, constellation mapping, descrambling, and restoring an MPDU.

In an optional manner of the fourth aspect, the wireless module is configured to convert the first uplink wireless signal into an electrical signal, and perform second uplink related processing of a physical layer and first uplink related processing of the physical layer on the electrical signal in sequence, to obtain the first uplink electrical signal.

In an optional manner of the fourth aspect, the first uplink related processing of the physical layer includes a first subset of the uplink related processing of the physical layer. The second uplink related processing of the physical layer includes a second subset of the uplink related processing of the physical layer. The uplink related processing of the physical layer includes synchronization, FFT, constellation mapping, descrambling, and restoring an MPDU. The first subset is different from the second subset.

In an optional manner of the fourth aspect, the wireless module is configured to convert the first uplink wireless signal into an electrical signal, and perform second uplink related processing of a physical layer, first uplink related processing of the physical layer, and second uplink related processing of the MAC layer on the electrical signal in sequence, to obtain the first uplink electrical signal.

In an optional manner of the fourth aspect, the first uplink related processing of the MAC layer includes a first subset of uplink related processing of the MAC layer. The second uplink related processing of the MAC layer includes a second subset of the uplink related processing of the MAC layer. The uplink related processing of the MAC layer includes A-MPDU parsing, CRC, ACK or block acknowledgment BA, and A-MSDU parsing. The first subset is different from the second subset.

In an optional manner of the fourth aspect, the sub device further includes a processor. The photoelectric conversion unit is further configured to receive incremental signaling from the main device. The incremental signaling includes a frame identifier and information about a variable field. The processor is configured to obtain a first fixed field set based on the frame identifier and a first mapping relationship. The first mapping relationship includes a mapping relationship between a plurality of frame identifiers and a plurality of fixed field sets. The processor is further configured to obtain a first control frame based on the variable field and the first fixed field set. The wireless module is further configured to send the first control frame to the STA.

In an optional manner of the fourth aspect, a frame format of the first control frame complies with a specification in the 802.11 protocol.

In an optional manner of the fourth aspect, the first control frame is an ACK frame. The frame identifier indicates that a type of the first control frame is the ACK frame. The information about the variable field includes at least one of the following information: information about a duration field, a destination address field, a frame check sequence field, a more fragments flag field, a retry flag, and an extension field. The first fixed field set includes at least one of the following information: information about a to distributed system flag, a from distributed system flag, a power management flag, and a protected field.

In an optional manner of the fourth aspect, the photoelectric conversion unit is further configured to receive a first downlink optical signal from the main device. The photoelectric conversion unit is further configured to convert the first downlink optical signal into a first downlink electrical signal. The first downlink electrical signal is obtained after the main device performs downlink related processing on a second service packet. The downlink related processing includes first downlink related processing of the MAC layer. The wireless module is further configured to obtain a first downlink wireless signal based on the first downlink electrical signal. The wireless module is further configured to send the first downlink wireless signal to the STA.

In an optional manner of the fourth aspect, the wireless module is configured to perform second downlink related processing of the physical layer on the first downlink electrical signal, and obtain the first downlink wireless signal based on a processed electrical signal.

In an optional manner of the fourth aspect, the wireless module is configured to perform first downlink related processing of the physical layer and second downlink related processing of the physical layer on the first downlink electrical signal in sequence, and obtain the first downlink wireless signal based on a processed electrical signal.

In an optional manner of the fourth aspect, the wireless module is configured to perform second downlink related processing of the MAC layer, first downlink related processing of the physical layer, and second downlink related processing of the physical layer on the first downlink electrical signal in sequence, and obtain the first downlink wireless signal based on a processed electrical signal.

A fifth aspect of this application provides an optical communication system. The optical communication system includes a main device and a first sub device. The main device and the first sub device are connected through an optical splitter. The main device is configured to perform the method according to any one of the first aspect or the optional manners of the first aspect. The first sub device is configured to perform the method according to any one of the second aspect or the optional manners of the second aspect.

### BRIEF DESCRIPTION OF DRAWINGS

FIG. 1 is a first diagram of a structure of an optical communication system according to an embodiment of this application;
FIG. 1.1 is a diagram of a structure of uplink related processing of a wireless signal according to an embodiment of this application;
FIG. 2 is a second diagram of a structure of an optical communication system according to an embodiment of this application;
FIG. 2.1 is a third diagram of a structure of an optical communication system according to an embodiment of this application;
FIG. 3 is a fourth diagram of a structure of an optical communication system according to an embodiment of this application;
FIG. 4 is a fifth diagram of a structure of an optical communication system according to an embodiment of this application;
FIG. 5 is a sixth diagram of a structure of an optical communication system according to an embodiment of this application;
FIG. 5.1 is a diagram of a structure of a sub device according to an embodiment of this application;
FIG. 6 is a diagram of a structure of a first uplink electrical signal of an optical layer according to an embodiment of this application;
FIG. 6.1 is a diagram of a structure of downlink related processing of a wireless signal according to an embodiment of this application;
FIG. 7 is a diagram of a structure of incremental signaling according to an embodiment of this application;
FIG. 8 is a diagram of a structure of a first fixed field set according to an embodiment of this application;
FIG. 9 is a diagram of a structure of an ACK frame;
FIG. 10 is a diagram of a structure of a communication system according to an embodiment of this application;
FIG. 11 is a first schematic flowchart of an optical communication method according to an embodiment of this application;
FIG. 12 is a second schematic flowchart of an optical communication method according to an embodiment of this application;
FIG. 13 is a diagram of a structure of a first sub device according to an embodiment of this application; and
FIG. 14 is a diagram of a structure of a main device according to an embodiment of this application.

### DESCRIPTION OF EMBODIMENTS

This application provides an optical communication method, a main device, and a sub device. Related processing of a medium access control (medium access control, MAC) layer in the sub device is moved up to the main device, so that manufacturing costs of the sub device can be reduced, thereby reducing manufacturing costs of an optical communication system. It should be understood that "first", "second", "target", and the like used in this application are merely used for distinction and description, but cannot be understood as an indication or implication of relative importance or an indication or implication of a sequence. Unless otherwise specified, detailed descriptions of some technical features in an embodiment may also be used to explain corresponding technical features mentioned in another embodiment. For example, a processing action included in a first uplink related processing in an embodiment may also be applied to first uplink related processing mentioned in another embodiment. In addition, for brevity and clarity, reference numbers and/or letters are repeated in a plurality of accompanying drawings of this application. Repetition is not indicative of a strict limiting relationship between various embodiments and/or configurations.

The optical communication system in this application may be applied to a passive optical network (passive optical network, PON). In a PON system, a main optical network unit (optical network unit, ONU) may be connected to a plurality of sub ONUs through an optical splitter. In a downlink direction, downlink optical signals sent by the main ONU are allocated, through the optical splitter, to the sub ONUs connected to the optical splitter. In an uplink direction, uplink optical signals from the sub ONUs are coupled to the main ONU through the optical splitter in a time division manner. In actual application, costs of the sub ONU are high, resulting in high costs of the PON.

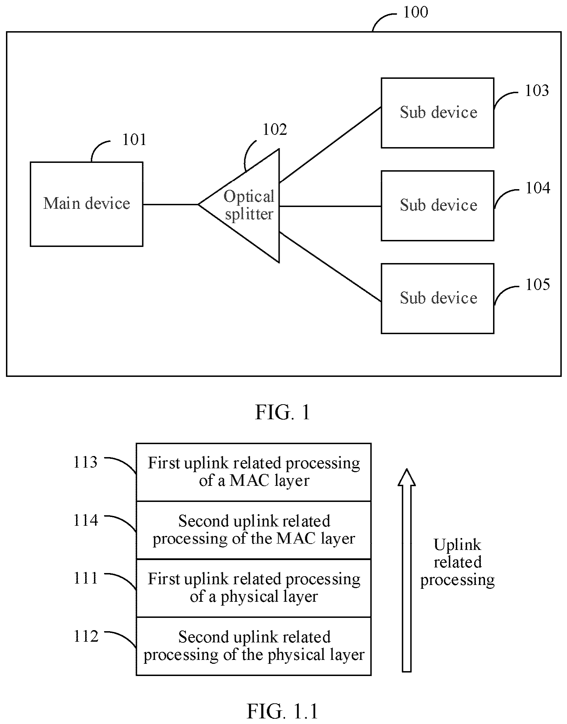

In view of this, this application provides an optical communication system. FIG. 1 is a first diagram of a structure of an optical communication system according to an embodiment of this application. As shown in FIG. 1, the optical communication system 100 includes a main device 101, an optical splitter 102, and a sub device. There may be one or more sub devices. In an example in FIG. 1, the optical communication system 100 includes a plurality of sub devices. The plurality of sub devices include sub devices 103 to 105. The main device 101 may be a main gateway, an access controller (access controller, AC), a main ONU, a main optical network terminal (optical network terminal, ONT), a main FTTR unit (main FTTR unit, MFU), or a main FTTR. The sub device may be a sub gateway, an access point (access point, AP), a sub ONU, a sub ONT, a sub FTTR unit (sub FTTR unit, SFU), or a sub FTTR. The main device 101 and the sub device are connected through the optical splitter 102. In an uplink direction, uplink optical signals from the sub devices are coupled to the main device 101 through the optical splitter 102 in a time division manner. In a downlink direction, a downlink optical signal sent by the main device 101 is allocated, through the optical splitter 102, to the sub device connected to the optical splitter 102.

The main device 101 is associated with a first station (station, STA) through a first sub device in the plurality of sub devices. The first sub device may be any one of the sub devices 103 to 105. The first sub device is configured to receive a first uplink wireless signal from the first STA. The first uplink wireless signal may be a Wi-Fi signal or a millimeter wave signal. The first sub device is further configured to obtain a first uplink electrical signal based on the first uplink wireless signal, convert the first uplink electrical signal into a first uplink optical signal, and transmit the first uplink optical signal to the main device 101. The main device 101 is configured to receive the first uplink optical signal from the first sub device, and convert the first uplink optical signal into the first uplink electrical signal. FIG. 1.1 is a diagram of a structure of uplink related processing of a wireless signal according to an embodiment of this application. As shown in FIG. 1.1, the uplink related processing of the wireless signal includes uplink related processing of a physical layer and uplink related processing of a MAC layer. The uplink related processing of the physical layer includes second uplink related processing 112 of the physical layer and first uplink related processing 111 of the physical layer. The uplink related processing of the MAC layer includes first uplink related processing 113 of the MAC layer and second uplink related processing 114 of the MAC layer. Descriptions are separately provided below.

The uplink related processing of the physical layer may include synchronization, fast Fourier transform (fast Fourier transform, FFT), constellation mapping, descrambling, and restoring a medium access control protocol data unit (medium access control protocol data unit, MPDU). It should be understood that this application merely describes an example of the uplink related processing of the physical layer. In actual application, the uplink related processing of the physical layer may include more or fewer processing actions. For example, the uplink related processing of the physical layer does not include synchronization. For another example, the uplink related processing of the physical layer further includes channel estimation or forward error correction.

The first uplink related processing 111 of the physical layer may also be referred to as higher-order uplink related processing of the physical layer, and the second uplink related processing 112 of the physical layer may also be referred to as lower-order uplink related processing of the physical layer. For example, the second uplink related processing 112 of the physical layer includes the synchronization, the FFT, and the constellation mapping; and the first uplink related processing 111 of the physical layer includes the descrambling and the restoring the MPDU. It should be understood that a person skilled in the art may divide the uplink related processing of the physical layer into the second uplink related processing 112 of the physical layer and the first uplink related processing 111 of the physical layer as required. Therefore, specific processing actions included in the second uplink related processing 112 of the physical layer and the first uplink related processing 111 of the physical layer are not limited in this application.

The uplink related processing of the MAC layer may include aggregation-medium access control protocol data unit (aggregation-medium access control protocol data unit, A-MPDU) parsing, cyclic redundancy check (cyclic redundancy check, CRC), and aggregation-medium access control service data unit (aggregation-medium access control service data unit, A-MSDU) parsing. The uplink related processing of the MAC layer may further include acknowledgment (acknowledge, ACK) or block acknowledgment (block acknowledgement, BA) replying. Deframing includes A-MPDU parsing and/or A-MSDU parsing. It should be understood that, in this embodiment of this application, only an example of the uplink related processing of the MAC layer is described. In actual application, the uplink related processing of the MAC layer may include more or fewer processing actions. For example, the uplink related processing of the MAC layer does not include CRC. For another example, the uplink related processing of the MAC layer further includes MAC frame receive buffer management or receive frame filtering.

The first uplink related processing 113 of the MAC layer may also be referred to as higher-order uplink related processing of the MAC layer, and the second uplink related processing 114 of the MAC layer may also be referred to as lower-order uplink related processing of the MAC layer. For example, the first uplink related processing 113 of the MAC layer includes ACK replying and A-MSDU parsing. The second uplink related processing 114 of the MAC layer includes A-MPDU parsing and CRC. For another example, the first uplink related processing 113 of the MAC layer includes A-MPDU parsing. The second uplink related processing 114 of the MAC layer includes CRC, ACK replying, and A-MSDU parsing. It should be understood that a person skilled in the art may divide the uplink related processing of the MAC layer into the first uplink related processing 113 of the MAC layer and the second uplink related processing 114 of the MAC layer as required. Therefore, specific processing actions included in the first uplink related processing 113 and the second uplink related processing 114 of the MAC layer are not limited in this application.

The uplink related processing of the MAC layer may include uplink processing of a MAC layer data plane and uplink processing of a MAC layer control plane. The uplink processing of the MAC layer data plane includes ACK replying, A-MSDU parsing, or CRC. The uplink processing of the MAC layer control plane includes obtaining a user protocol packet and replying, obtaining a system status and analyzing the system status, or the like. The first uplink related processing 113 of the MAC layer may include the uplink processing of the MAC layer data plane and/or the uplink processing of the MAC layer control plane. The second uplink related processing 114 of the MAC layer may include the uplink processing of the MAC layer data plane and/or the uplink processing of the MAC layer control plane.

It can be learned from the description in FIG. 1.1 that uplink related processing of a wireless protocol includes four parts. The four parts are respectively the first uplink related processing 113 of the MAC layer, the second uplink related processing 114 of the MAC layer, the first uplink related processing 111 of the physical layer, and the second uplink related processing 112 of the physical layer. In this embodiment of this application, one or more of the four parts are moved up to the main device 101, in other words, the main device 101 is configured to perform a part or all of the uplink related processing of the wireless signal on the first uplink electrical signal. According to the solutions provided in this application, processing of the sub device is simplified, and requirements on a hardware capability and a software capability of the sub device are reduced, so that costs of the sub device are reduced. The following separately describes various possible implementation solutions.

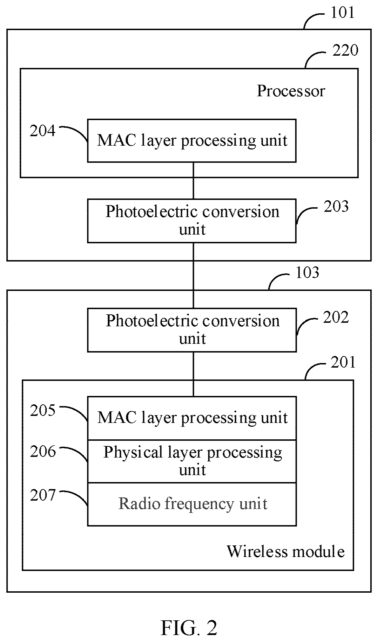

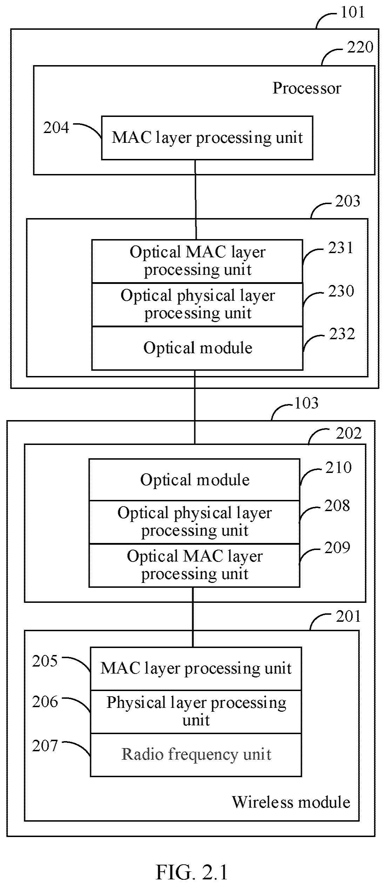

FIG. 2 is a second diagram of a structure of an optical communication system according to an embodiment of this application. As shown in FIG. 2, the optical communication system includes a main device 101 and a sub device 103. The main device 101 and the sub device 103 are connected through an optical splitter 102 (not shown in the figure).

The sub device 103 includes a wireless module 201 and a photoelectric conversion unit 202. The wireless module 201 includes a radio frequency unit 207, a physical layer processing unit 206, and a MAC layer processing unit 205. A physical layer may also be referred to as a PHY layer. The radio frequency unit 207 is configured to receive a first uplink wireless signal from a first STA, and convert the first uplink wireless signal into an electrical signal. The physical layer processing unit 206 may include a digital signal processor (digital signal processor, DSP) chip. The physical layer processing unit 206 is configured to perform uplink related processing of the physical layer on the electrical signal, and transmit a processed electrical signal to the MAC layer processing unit 205. The MAC layer processing unit 205 may be a MAC chip. The MAC layer processing unit 205 is configured to perform second uplink related processing of the MAC layer on the processed electrical signal, to obtain a first uplink electrical signal. The MAC layer processing unit 205 is configured to transmit the first uplink electrical signal to the photoelectric conversion unit 202. The photoelectric conversion unit 202 is configured to convert the first uplink electrical signal into a first uplink optical signal, and transmit the first uplink optical signal to the main device 101.

The main device 101 includes a photoelectric conversion unit 203 and a processor 220. The processor 220 includes a MAC layer processing unit 204. The photoelectric conversion unit 203 includes an optical module. The optical module is configured to convert the first uplink optical signal into the first uplink electrical signal. The MAC layer processing unit 204 is configured to perform first uplink related processing of the MAC layer on the first uplink electrical signal, to obtain a first service packet, and output the first service packet. For example, the main device 101 is a main ONU. The main device 101 further includes another optical module. The another optical module is configured to convert the first service packet into a third uplink optical signal, and transmit the third uplink optical signal to an OLT. The OLT is configured to send the third uplink optical signal or an electrical signal obtained based on the third uplink optical signal to a public network. For another example, the main device 101 is configured to transmit the first service packet to another device. For another example, the main device 101 is configured to encapsulate the first service packet to obtain a layer 3 packet, and transmit the layer 3 packet to another device. Optionally, the first service packet is an Ethernet (Ethernet, ETH) packet.

FIG. 2.1 is a third diagram of a structure of an optical communication system according to an embodiment of this application. As shown in FIG. 2.1, based on FIG. 2, the photoelectric conversion unit 202 includes an optical MAC layer processing unit 209, an optical physical layer processing unit 208, and an optical module 210; and the photoelectric conversion unit 203 includes an optical MAC layer processing unit 231, an optical physical layer processing unit 230, and an optical module 232. Optical MAC layer processing may also be referred to as PON protocol MAC layer processing. Optical physical layer processing may also be referred to as PON protocol physical layer processing. The MAC layer processing unit 205 is configured to transmit a first uplink electrical signal to the optical MAC layer processing unit 209. The optical MAC layer processing unit 209 is configured to perform uplink related processing of an optical MAC layer on the first uplink electrical signal, to obtain a processed first uplink electrical signal. The optical MAC layer processing unit 209 is configured to transmit the processed first uplink electrical signal to the optical physical layer processing unit 208. The optical physical layer processing unit 208 is configured to perform uplink related processing of an optical physical layer on the processed first uplink electrical signal. The optical physical layer processing unit 208 is configured to transmit a processed first uplink electrical signal to the optical module 210. The optical module 210 is configured to convert the processed first uplink electrical signal into a first uplink optical signal, and transmit the first uplink optical signal to the photoelectric conversion unit 203. The optical module 232 in the photoelectric conversion unit 203 is configured to convert the first uplink optical signal into the first uplink electrical signal, and transmit the first uplink electrical signal to the optical physical layer processing unit 230. The optical physical layer processing unit 230 is configured to perform the uplink related processing of the optical physical layer on the first uplink electrical signal, and transmit a processed first uplink electrical signal to the optical MAC layer processing unit 231. The optical MAC layer processing unit 231 is configured to perform the uplink related processing of the optical MAC layer on the processed first uplink electrical signal, and transmit a processed first uplink electrical signal to the MAC layer processing unit 204. The MAC layer processing unit 204 is configured to perform first uplink related processing of a MAC layer on the processed first uplink electrical signal.

It can be seen from FIG. 2 and FIG. 2.1 that the photoelectric conversion unit 202 and the photoelectric conversion unit 203 include at least the optical module, and may further include the optical MAC layer processing unit and the optical physical layer processing unit. In subsequent embodiments of this application, for brevity of description, the photoelectric conversion unit 202 and the photoelectric conversion unit 203 are not described in detail. However, a person skilled in the art should understand that the photoelectric conversion unit 202 and the photoelectric conversion unit 203 shown in FIG. 2 and FIG. 2.1 are also applicable to other embodiments of this application.

In actual application, the uplink related processing of the MAC layer includes a processing action that affects a delay of a STA. To reduce the delay of the STA, the processing action that affects the delay of the STA may be retained in the sub device 103. In this case, the second uplink related processing of the MAC layer includes the processing action that affects the delay of the STA. The processing action that affects the delay of the STA may include an A-MPDU parsing and CRC. The processing action that affects the delay of the STA may further include ACK or BA replying. In this case, the first uplink related processing of the MAC layer includes A-MSDU parsing.

In the example in FIG. 2, the main device 101 is configured to perform the first uplink related processing of the MAC layer, and the sub device 103 is configured to perform the second uplink related processing of the MAC layer. In actual application, the main device 101 may also be configured to perform the second uplink related processing of the MAC layer, and the sub device 103 does not need to perform the second uplink related processing of the MAC layer. This is described below.

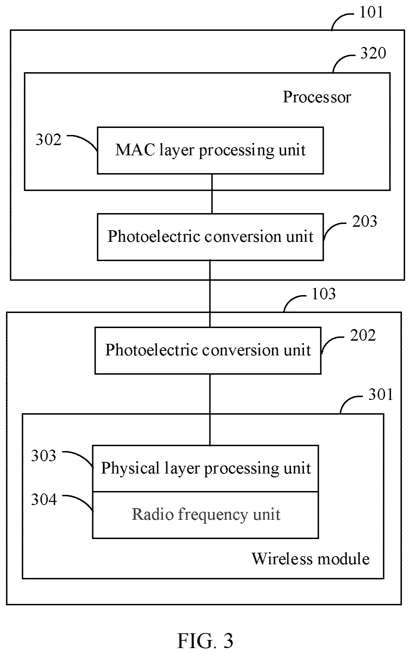

FIG. 3 is a fourth diagram of a structure of an optical communication system according to an embodiment of this application. As shown in FIG. 3, the optical communication system includes a main device 101 and a sub device 103. The sub device 103 includes a wireless module 301 and a photoelectric conversion unit 202. The wireless module 301 includes a radio frequency unit 304 and a physical layer processing unit 303. The radio frequency unit 304 is configured to receive a first uplink wireless signal from a first STA, and convert the first uplink wireless signal into an electrical signal. The physical layer processing unit 303 is configured to perform uplink related processing of a physical layer on the electrical signal, to obtain a first uplink electrical signal. The first uplink electrical signal may be a MAC frame or a Wi-Fi MAC frame. The MAC frame or the Wi-Fi MAC frame is an MPDU. The photoelectric conversion unit 202 is configured to convert the first uplink electrical signal into a first uplink optical signal, and transmit the first uplink optical signal to the main device 101. The main device 101 includes a photoelectric conversion unit 203 and a processor 320. The processor 320 includes a MAC layer processing unit 302. The photoelectric conversion unit 203 is configured to convert the first uplink optical signal into the first uplink electrical signal. The MAC layer processing unit 302 is configured to perform uplink related processing of a MAC layer on the first uplink electrical signal, to obtain a first service packet, and output the first service packet.

In the example in FIG. 3, the sub device 103 is configured to perform first uplink related processing of the physical layer and second uplink related processing of the physical layer. In actual application, the main device 101 may also be configured to perform the first uplink related processing of the physical layer, and the sub device 103 is configured to perform the second uplink related processing of the physical layer. This is described below.

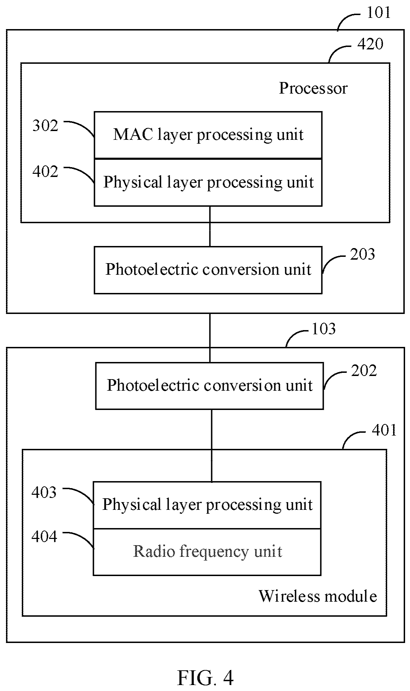

FIG. 4 is a fifth diagram of a structure of an optical communication system according to an embodiment of this application. As shown in FIG. 4, the optical communication system includes a main device 101 and a sub device 103. The sub device 103 includes a wireless module 401 and a photoelectric conversion unit 202. The wireless module 401 includes a radio frequency unit 404 and a physical layer processing unit 403. The radio frequency unit 404 is configured to receive a first uplink wireless signal from a first STA, and convert the first uplink wireless signal into an electrical signal. The physical layer processing unit 403 is configured to perform second uplink related processing of a physical layer on the electrical signal, to obtain a first uplink electrical signal. The photoelectric conversion unit 202 is configured to convert the processed first uplink electrical signal into a first uplink optical signal, and transmit the first uplink optical signal to the main device 101. The main device 101 includes a photoelectric conversion unit 203 and a processor 420. The processor 420 includes a physical layer processing unit 402 and a MAC layer processing unit 302. The photoelectric conversion unit 203 is configured to convert the first uplink optical signal into the first uplink electrical signal. The physical layer processing unit 402 is configured to perform first uplink related processing of the physical layer on the first uplink electrical signal. The MAC layer processing unit 302 is configured to perform uplink related processing of a MAC layer on a processed first uplink electrical signal, to obtain a first service packet.

In the example in FIG. 4, the sub device 103 is configured to perform the second uplink related processing of the physical layer, and the main device 101 is configured to perform the first uplink related processing of the physical layer. In actual application, the main device 101 may also be configured to perform the second uplink related processing of the physical layer, and the sub device 103 does not need to perform the second uplink related processing of the physical layer. This is described below.

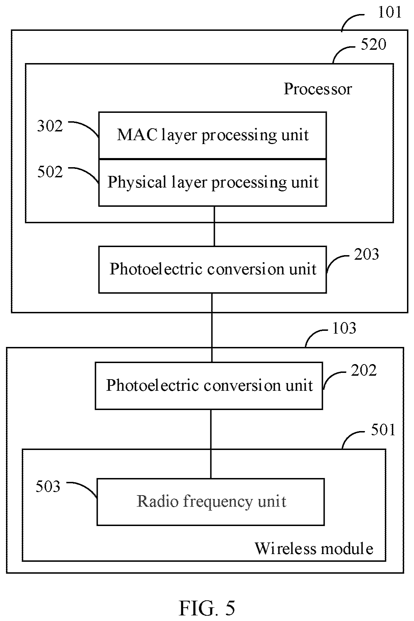

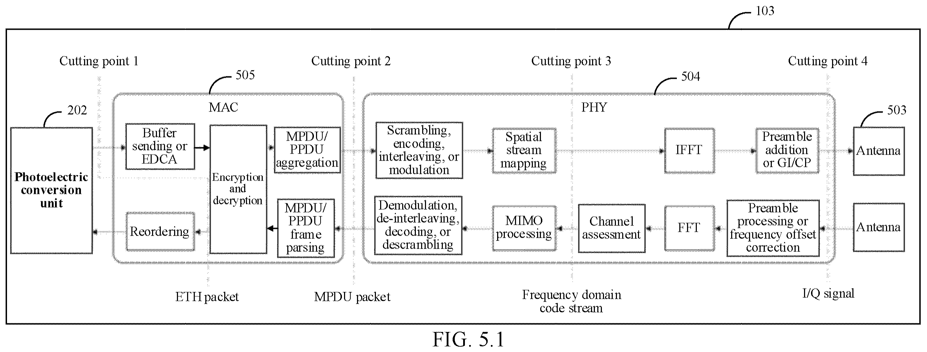

FIG. 5 is a sixth diagram of a structure of an optical communication system according to an embodiment of this application. As shown in FIG. 5, the optical communication system includes a main device 101 and a sub device 103. The sub device 103 includes a wireless module 501 and a photoelectric conversion unit 202. The wireless module 501 includes a radio frequency unit 503. The radio frequency unit 503 is configured to receive a first uplink wireless signal from a first STA, and convert the first uplink wireless signal into a first uplink electrical signal. The photoelectric conversion unit 202 is configured to convert the first uplink electrical signal into a first uplink optical signal, and transmit the first uplink optical signal to the main device 101. The main device 101 includes a photoelectric conversion unit 203 and a processor 520. The processor 520 includes a physical layer processing unit 502 and a MAC layer processing unit 302. The photoelectric conversion unit 203 is configured to convert the first uplink optical signal into the first uplink electrical signal. The physical layer processing unit 502 is configured to perform uplink related processing of a physical layer on the first uplink electrical signal. The MAC layer processing unit 302 is configured to perform uplink related processing of a MAC layer on a processed first uplink electrical signal, to obtain a first service packet.

FIG. 5.1 is a diagram of a structure of a sub device according to an embodiment of this application. As shown in FIG. 5.1, the sub device 103 includes a photoelectric conversion unit 202 and a wireless module. The wireless module includes an antenna 503, a physical layer processing circuit 504, and a MAC layer processing circuit 505. In an uplink direction, the physical layer processing circuit 504 includes a preamble addition circuit or frequency offset correction circuit, an FFT circuit, a channel assessment circuit, a multiple-input multiple-output (multiple-input multiple-output, MIMO) processing circuit, and a demodulation, de-interleaving, decoding, or descrambling circuit. The MAC layer processing circuit 505 includes an MPDU/physical layer protocol data unit (PHY protocol data unit, PPDU) frame parsing circuit, an encryption and decryption circuit, and a reordering circuit. In a downlink direction, the MAC layer processing circuit 505 includes a buffer sending or enhanced distributed channel access (enhanced distributed channel access, EDCA) circuit, an encryption and decryption circuit, and an MPDU/PPDU aggregation circuit. The physical layer processing circuit 504 includes a preamble addition, guard interval (guard interval, GI), or contention period (contention period, CP) circuit, an IFFT circuit, a spatial stream mapping circuit, and a scrambling, encoding, interleaving, or modulation circuit.

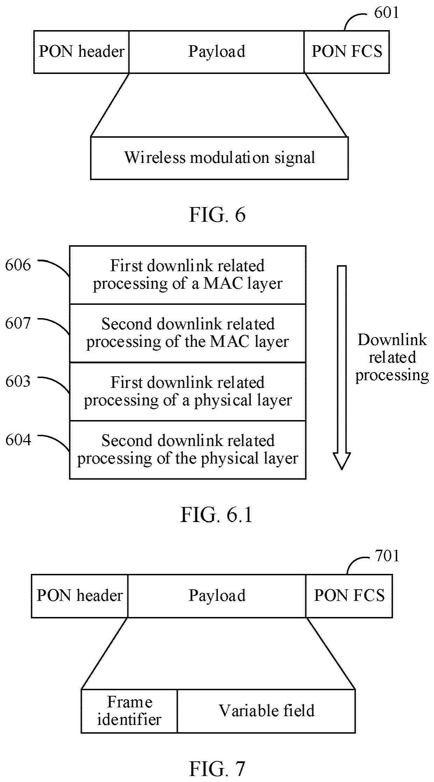

In this application, some circuits in the wireless module may be moved up to a main device, to reduce costs of the sub device. For example, for a cutting point 1, a circuit on the left side of the cutting point 1 in the wireless module may be moved up to the main device, and a circuit on the right side of the cutting point 1 may be retained in the sub device 103. In this case, the wireless module of the sub device 103 may not need to include the reordering circuit. The sub device 103 transmits an ETH packet to the main device. For another example, for a cutting point 2, a circuit on the left side of the cutting point 2 in the wireless module may be moved up to the main device, and a circuit on the right side of the cutting point 2 may be retained in the sub device 103. In this case, the wireless module of the sub device 103 may not need to include the MAC layer processing circuit 505. The sub device 103 transmits an Ethernet MPDU packet to the main device. For another example, for a cutting point 3, a circuit on the left side of the cutting point 3 in the wireless module may be moved up to the main device, and a circuit on the right side of the cutting point 3 may be retained in the sub device 103. In this case, the wireless module of the sub device 103 may not need to include the MAC layer processing circuit 505, the MIMO processing circuit, the demodulation, de-interleaving, decoding, or descrambling circuit, the spatial stream mapping circuit, and the scrambling, encoding, interleaving, or modulation circuit. The sub device 103 transmits an Ethernet frequency domain code stream to the main device. For another example, for a cutting point 4, a circuit on the left side of the cutting point 4 in the wireless module may be moved up to the main device. In this case, the wireless module of the sub device 103 may not need to include the MAC layer processing circuit 505 and the physical layer processing circuit 504. The sub device 103 transmits an I/Q signal to the main device. In the examples in FIG. 2 to FIG. 5.1, the photoelectric conversion unit 202 is configured to receive a first uplink electrical signal of an electrical layer from the wireless module, and convert the first uplink electrical signal of the electrical layer into a first uplink optical signal. Before the electrical-to-optical conversion, the photoelectric conversion unit 202 may be configured to add a header and a check bit to the first uplink electrical signal of the electrical layer, to obtain a first uplink electrical signal of an optical layer. The photoelectric conversion unit 202 is configured to convert the first uplink electrical signal of the optical layer into the first uplink optical signal. FIG. 6 is a diagram of a structure of a first uplink electrical signal of an optical layer according to an embodiment of this application. As shown in FIG. 6, the first uplink electrical signal 601 of the optical layer includes a PON header field, a payload field, and a passive optical network frame check sequence (PON frame check sequence, PON FCS) field. The payload field is used to carry a wireless modulation signal output by a wireless module, that is, a first uplink electrical signal of an electrical layer.

In the examples in FIG. 2 to FIG. 5.1, the wireless modulation signal may be in different formats. For example, in FIG. 5, a wireless modulation signal output by the wireless module 501 is an in-phase/quadrature (in-phase/quadrature, I/Q) signal. In FIG. 3, a wireless modulation signal output by the wireless module 301 is a Wi-Fi MAC frame. In FIG. 4, a wireless modulation signal output by the wireless module 401 is an intermediate signal generated in a procedure of obtaining a MAC frame by using an I/Q signal. In FIG. 2, a wireless modulation signal output by the wireless module 201 is an intermediate signal generated in a procedure of obtaining a service packet by using a MAC frame. In the examples in FIG. 2 to FIG. 5.1, the sub device 103 moves the uplink related processing of the physical layer and/or the uplink related processing of the MAC layer up to the main device 101, so that manufacturing costs of the sub device 103 are reduced. Similarly, in actual application, the sub device 103 may move a part or all of downlink related processing of the wireless signal up to the main device 101. FIG. 6.1 is a diagram of a structure of downlink related processing of a wireless signal according to an embodiment of this application. As shown in FIG. 6.1, the downlink related processing of the wireless signal includes downlink related processing of a physical layer and downlink related processing of a MAC layer. Descriptions are separately provided below.

The downlink related processing of the physical layer may include scrambling, encoding, constellation mapping, inverse fast Fourier transform (inverse fast Fourier transform, IFFT), and composing a physical layer protocol data unit (physical layer protocol data unit, PPDU). It should be understood that this application describes only an example of the downlink related processing of the physical layer. In actual application, the downlink related processing of the physical layer may include more or fewer processing actions. For example, the downlink related processing of the physical layer does not include encoding. For another example, the downlink related processing of the physical layer further includes interleaving or signal enhancement.

The downlink related processing of the physical layer includes first downlink related processing 603 of the physical layer and second downlink related processing 604 of the physical layer. The first downlink related processing 603 of the physical layer may also be referred to as higher-order downlink related processing of the physical layer. The second downlink related processing 604 of the physical layer may also be referred to as lower-order downlink related processing of the physical layer. For example, the second downlink related processing 604 of the physical layer includes IFFT and composing a PPDU; and the first downlink related processing 603 of the physical layer includes scrambling, encoding, and constellation mapping. It should be understood that a person skilled in the art may divide the downlink related processing 602 of the physical layer into the first downlink related processing 603 of the physical layer and the second downlink related processing 604 of the physical layer as required. Therefore, specific processing actions included in the first downlink related processing 603 and the second downlink related processing 604 of the physical layer are not limited in this application.

The downlink related processing of the MAC layer may include frame encapsulation, aggregation, generating a transmit vector, determining an air interface status, and submission to the physical layer. The frame encapsulation refers to encapsulating a service frame into an MPDU. The aggregation refers to aggregating MPDUs to form an A-MPDU. The generating the transmit vector refers to generating related control information to be sent to a physical layer processing unit. For determining the air interface status, the air interface status may be determined by using carrier sense multiple access with collision avoidance (carrier sense multiple access with collision avoidance, CSMA/CA). The submission to the physical layer refers to transferring a MAC frame and a transmit vector to the physical layer processing unit. It should be understood that this application merely describes only an example of the downlink related processing of the MAC layer. In actual application, the downlink related processing of the MAC layer may include more or fewer processing actions. For example, the downlink related processing of the MAC layer does not include determining an air interface status. For another example, the downlink related processing of the MAC layer further includes data encryption or session establishment.

The downlink related processing of the MAC layer includes first downlink related processing 606 of the MAC layer and second downlink related processing 607 of the MAC layer. The first downlink related processing 606 of the MAC layer may also be referred to as higher-order downlink related processing of the MAC layer. The second downlink related processing 607 of the MAC layer may also be referred to as lower-order downlink related processing of the MAC layer. For example, the first downlink related processing 606 of the MAC layer includes frame encapsulation; and the second downlink related processing 607 of the MAC layer includes aggregation, generating a transmit vector, determining an air interface status, and submission to the physical layer. For another example, the first downlink related processing 606 of the MAC layer includes frame encapsulation and aggregation; and the second downlink related processing 607 of the MAC layer includes generating a transmit vector, determining an air interface status, and submission to the physical layer. It should be understood that, a person skilled in the art may divide the downlink related processing of the MAC layer into the first downlink related processing 606 of the MAC layer and the second downlink related processing 607 of the MAC layer as required. Therefore, specific processing actions included in the first downlink related processing 606 and the second downlink related processing 607 of the MAC layer are not limited in this application.

The downlink related processing of the MAC layer may include downlink processing of a MAC layer data plane and downlink processing of a MAC layer control plane. The downlink processing of the MAC layer data plane includes ACK replying, A-MSDU parsing, or CRC. The downlink processing of the MAC layer control plane includes obtaining a user protocol packet and replying, obtaining a system status and analyzing the system status, or the like. The first downlink related processing 606 of the MAC layer may include the downlink processing of the MAC layer data plane and/or the downlink processing of the MAC layer control plane. The second downlink related processing 607 of the MAC layer may include the downlink processing of the MAC layer data plane and/or the downlink processing of the MAC layer control plane.

It can be learned from the description in FIG. 6.1 that downlink related processing includes four parts. The four parts are respectively the first downlink related processing 606 of the MAC layer, the second downlink related processing 607 of the MAC layer, the first downlink related processing 603 of the physical layer, and the second downlink related processing 604 of the physical layer. In this embodiment of this application, one or more of the four parts are moved up to the main device 101, so that processing of the sub device is simplified, and requirements on a hardware capability and a software capability of the sub device are reduced, thereby reducing costs of the sub device. The following separately describes various possible implementation solutions by using FIG. 2 to FIG. 5 as examples.

As shown in FIG. 2, the optical communication system includes the main device 101 and the sub device 103. The main device 101 and the sub device 103 are connected through the optical splitter 102 (not shown in the figure). The main device 101 is configured to receive a second service packet. For example, the main device 101 is a main ONU, and the main device 101 receives the second service packet from a public network through an OLT. The main device 101 includes the photoelectric conversion unit 203 and the processor 220. The processor 220 includes the MAC layer processing unit 204. The MAC layer processing unit 204 is configured to perform first downlink related processing of a MAC layer on the second service packet, to obtain a first downlink electrical signal. The photoelectric conversion unit 203 is configured to convert the first downlink electrical signal into a first downlink optical signal, and transmit the first downlink optical signal to the sub device 103. The main device 101 may further include an optical MAC layer processing unit and an optical physical layer processing unit. The MAC layer processing unit 204 is configured to transmit the first downlink electrical signal to the optical MAC layer processing unit. The optical MAC layer processing unit is configured to perform downlink related processing of an optical MAC layer on the first downlink electrical signal. The optical MAC layer processing unit is configured to transmit the first downlink electrical signal to the optical physical layer processing unit. The optical physical layer processing unit is configured to perform downlink related processing of an optical physical layer on the first downlink electrical signal. The optical physical layer processing unit is configured to transmit the first downlink electrical signal to the photoelectric conversion unit 203.

The sub device 103 includes the wireless module 201 and the photoelectric conversion unit 202. The photoelectric conversion unit 202 is configured to convert the first downlink optical signal into the first downlink electrical signal. The wireless module 201 includes the radio frequency unit 207, the physical layer processing unit 206, and the MAC layer processing unit 205. The MAC layer processing unit 205 is configured to perform second downlink related processing of the MAC layer on the first downlink electrical signal. The physical layer processing unit 206 is configured to perform downlink related processing of the physical layer on a processed first downlink electrical signal. The radio frequency unit 207 is configured to convert the first downlink electrical signal obtained after the downlink related processing of the physical layer into a first downlink wireless signal. The radio frequency unit 207 is further configured to send the first downlink wireless signal to a first STA.

In actual application, the downlink related processing of the MAC layer includes a processing action that affects a delay of a STA. To reduce the delay of the STA, the processing action that affects the delay of the STA may be retained in the sub device 103. In this case, the second downlink related processing of the MAC layer includes the processing action that affects the delay of the STA. The processing action that affects the delay of the STA may include determining an air interface status and submission to the physical layer. In this case, the first downlink related processing of the MAC layer includes frame encapsulation, aggregation, and generating a transmit vector.

In the example in FIG. 2, the main device 101 is configured to perform the first downlink related processing of the MAC layer, and the sub device 103 is configured to perform the second downlink related processing of the MAC layer. In actual application, the main device 101 may also be configured to perform the second downlink related processing of the MAC layer, and the sub device 103 does not need to perform the second downlink related processing of the MAC layer. This is described below.

As shown in FIG. 3, the optical communication system includes the main device 101 and the sub device 103. The main device 101 includes the photoelectric conversion unit 203 and the processor 320. The processor 320 includes the MAC layer processing unit 302. The MAC layer processing unit 302 is configured to perform downlink related processing of a MAC layer on a second service packet, to obtain a first downlink electrical signal. The photoelectric conversion unit 203 is configured to convert the first downlink electrical signal into a first downlink optical signal, and transmit the first downlink optical signal to the sub device 103. The sub device 103 includes the wireless module 301 and the photoelectric conversion unit 202. The photoelectric conversion unit 202 is configured to convert the first downlink optical signal into the first downlink electrical signal. The wireless module 301 includes the radio frequency unit 304 and the physical layer processing unit 303. The physical layer processing unit 303 is configured to perform downlink related processing of a physical layer on the first downlink electrical signal. The radio frequency unit 304 is configured to convert a processed first downlink electrical signal into a first downlink wireless signal. The radio frequency unit 304 is further configured to send the first downlink wireless signal to a first STA.

In the example in FIG. 3, the sub device 103 is configured to perform second downlink related processing and first downlink related processing of the physical layer. In actual application, the main device 101 may also be configured to perform the first downlink related processing of the physical layer, and the sub device 103 is configured to perform the second downlink related processing of the physical layer. This is described below.

FIG. 4 is a fifth diagram of a structure of an optical communication system according to an embodiment of this application. As shown in FIG. 4, the optical communication system includes the main device 101 and the sub device 103. The main device 101 includes the photoelectric conversion unit 203 and the processor 420. The processor 420 includes the physical layer processing unit 402 and the MAC layer processing unit 302. The MAC layer processing unit 302 is configured to perform downlink related processing of a MAC layer on a second service packet, to obtain an electrical signal. The physical layer processing unit 402 is configured to perform second downlink related processing of a physical layer on the electrical signal, to obtain a first downlink electrical signal. The photoelectric conversion unit 203 is configured to convert the first downlink electrical signal into a first downlink optical signal, and transmit the first downlink optical signal to the sub device 103. The sub device 103 includes the wireless module 401 and the photoelectric conversion unit 202. The photoelectric conversion unit 202 is configured to convert the first downlink optical signal into the first downlink electrical signal. The wireless module 401 includes the radio frequency unit 404 and the physical layer processing unit 403. The physical layer processing unit 403 is configured to perform second downlink related processing of the physical layer on the first downlink electrical signal. The radio frequency unit 404 is configured to convert a processed first downlink electrical signal into a first downlink wireless signal. The radio frequency unit 404 is further configured to send the first downlink wireless signal to a first STA.

In the example in FIG. 4, the sub device 103 is configured to perform the second downlink related processing of the physical layer, and the main device is configured to perform first downlink related processing of the physical layer. In actual application, the main device 101 may also be configured to perform the second downlink related processing of the physical layer, and the sub device 103 does not need to perform the second downlink related processing of the physical layer. This is described below.

FIG. 5 is a sixth diagram of a structure of an optical communication system according to an embodiment of this application. As shown in FIG. 5, the optical communication system includes the main device 101 and the sub device 103. The main device 101 includes the photoelectric conversion unit 203 and the processor 520. The processor 520 includes the physical layer processing unit 502 and the MAC layer processing unit 302. The MAC layer processing unit 302 is configured to perform downlink related processing of a MAC layer on a second service packet, to obtain an electrical signal. The physical layer processing unit 402 is configured to perform downlink related processing of a physical layer on the electrical signal, to obtain a first downlink electrical signal. The photoelectric conversion unit 203 is configured to convert the first downlink electrical signal into a first downlink optical signal, and transmit the first downlink optical signal to the sub device 103. The sub device 103 includes the wireless module 501 and the photoelectric conversion unit 202. The photoelectric conversion unit 202 is configured to convert the first downlink optical signal into the first downlink electrical signal. The wireless module 501 includes the radio frequency unit 503. The radio frequency unit 503 is configured to convert the first downlink electrical signal into a first downlink wireless signal. The radio frequency unit 503 is further configured to send the first downlink wireless signal to a first STA.

In the examples in FIG. 2 to FIG. 5.1, the photoelectric conversion unit 202 is configured to convert the first downlink optical signal into a first downlink electrical signal of an optical layer. After the electrical-to-optical conversion, the photoelectric conversion unit 202 may be further configured to remove a header and a check bit from the first downlink electrical signal of the optical layer, to obtain a first downlink electrical signal of an electrical layer. In the examples in FIG. 2 to FIG. 5.1, the first downlink electrical signal of the electrical layer may be in different formats. For example, in FIG. 5, a wireless modulation signal output by the photoelectric conversion unit 202 is an in-phase/quadrature (in-phase/quadrature, I/Q) signal. In FIG. 3, a wireless modulation signal output by the photoelectric conversion unit 202 is a Wi-Fi MAC frame. In FIG. 4, a wireless modulation signal output by the wireless module 401 is an intermediate signal generated in a process of obtaining an I/Q signal based on a MAC frame. In FIG. 2, a wireless modulation signal output by the photoelectric conversion unit 202 is an intermediate signal generated in a procedure of obtaining a MAC frame based on a service packet. In actual application, when the sub device 103 does not include a MAC layer processing unit, the sub device 103 cannot generate, by using the MAC layer processing unit, a control frame needed by the first STA. In this case, the sub device 103 may receive a control frame from the main device 101, and send the control frame to the first STA. However, to save transmission resources between the main device 101 and the sub device 103, the sub device 103 may send the control frame to the first STA by using incremental signaling. This is described below.

The main device 101 may learn whether a control frame needs to be sent to the first STA. For example, after receiving the first uplink electrical signal, the main device 101 needs to send an ACK frame to the first STA. After learning that the control frame needs to be sent to the first STA, the main device 101 sends incremental signaling to the sub device 103. The incremental signaling includes a frame identifier and information about a variable field. FIG. 7 is a diagram of a structure of incremental signaling according to an embodiment of this application. As shown in FIG. 7, the incremental signaling 701 includes a PON header field, a payload field, and a PON FCS field. The payload field is used to carry a frame identifier and information about a variable field. The sub device 103 is configured to obtain a first fixed field set based on the frame identifier and a first mapping relationship. The first mapping relationship includes a mapping relationship between a plurality of frame identifiers and a plurality of fixed field sets. The fixed field set may also be referred to as a frame template. The sub device 103 is configured to obtain a first control frame based on the variable field and the first fixed field set, and send the first control frame to the first STA. The following uses an example in which the first control frame is an ACK frame for description.

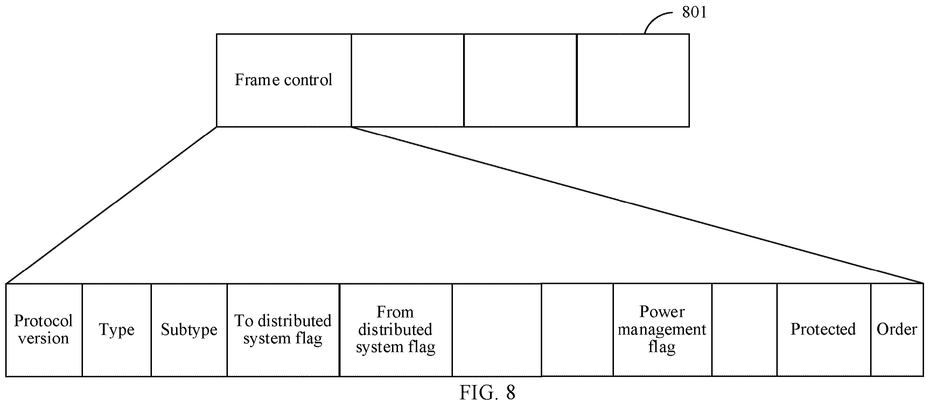

FIG. 8 is a diagram of a structure of a first fixed field set according to an embodiment of this application. As shown in FIG. 8, the first fixed field set 801 is a frame template of an ACK frame. The frame template of the ACK frame includes a frame control (frame control) field. The frame control field includes information about a protocol version (protocol version), a type (type), a subtype (subtype), a to distributed system (to distributed system, to DS) flag, a from distributed system (from distributed system, from DS) flag, a power management (power management) flag, a protected (protected frame) field, and an order (order) field. The incremental signaling includes an identifier of the ACK frame and information about a variable field. The variable field includes a duration (duration) field, a destination address (destination address, DA) field, a frame check sequence (frame check sequence, FCS) field, a more fragments (more fragments) flag, a retry (retry) flag, and an extension field. The extension field may also be referred to as a more data (more data) flag.

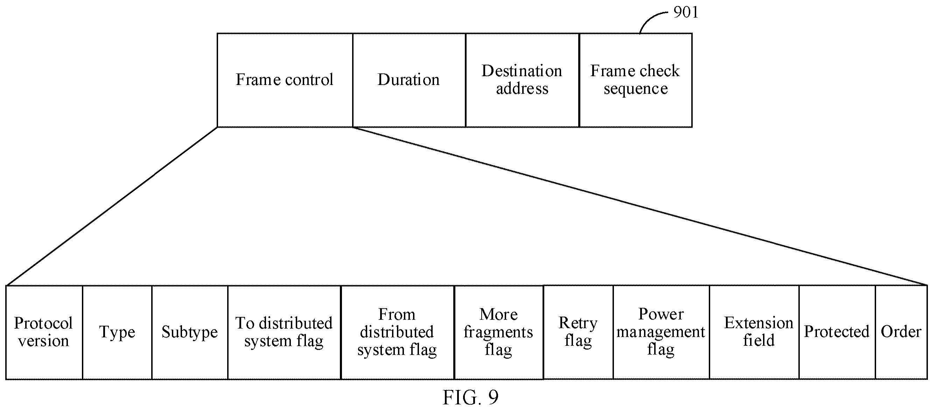

The sub device 103 obtains the frame template of the ACK frame based on the identifier of the ACK frame, and fills the variable field in the frame template of the ACK frame, to obtain the ACK frame. FIG. 9 is a diagram of a structure of an ACK frame. After obtaining the ACK frame 901, the sub device 103 sends the ACK frame 901 to the first STA.

It should be understood that FIG. 8 and FIG. 9 are merely examples of an obtained first control frame according to an embodiment of this application. In actual application, a person skilled in the art may divide a control frame into a fixed field and a variable field as required. For example, in actual application, the first control frame may be a BA frame. For another example, in FIG. 8, the order field in the first fixed field set 801 is a variable field.

In this embodiment of this application, to improve generalization of the first control frame, the first control frame may comply with a specification in the 802.11 protocol. The 802.11 protocol may also be referred to as the IEEE 802.11 protocol. The 802.11 protocol includes but is not limited to any one of the following protocols: 802.11a, 802.11b, 802.11n, 802.11ac, or 802.11ax.

In actual application, the plurality of sub devices may further include a second sub device. For example, the second sub device is a sub device 104. Similar to the uplink description of the first sub device described above, the main device may be configured to receive a second uplink optical signal from the second sub device. The main device is configured to convert the second uplink optical signal into a second uplink electrical signal. The main device is configured to perform uplink related processing on the second uplink electrical signal to obtain a third service packet. The uplink related processing includes first uplink related processing of a MAC layer. This is similar to the downlink description of the first sub device described above. The main device may be configured to receive a fourth service packet. The main device is configured to perform downlink related processing on the fourth service packet, to obtain a second downlink electrical signal. The downlink related processing includes first downlink related processing of the MAC layer. The main device converts the second downlink electrical signal into a second downlink optical signal, and transmits the second downlink optical signal to the second sub device.

When the second sub device is also in a wireless communication range of the first STA, the second sub device can also receive the first uplink wireless signal from the first STA. The second sub device is configured to transmit a first uplink optical signal to the main device 101 through an optical fiber. The main device 101 is further configured to receive the first uplink optical signal from the second sub device, and convert the first uplink optical signal into a first uplink electrical signal. When the main device 101 performs wireless communication with the first STA through the first sub device, the main device 101 may discard the first uplink electrical signal received from the second sub device.

The main device 101 may switch the sub device that performs wireless communication with the first STA. In the foregoing example, the main device 101 performs the wireless communication with the first STA through the first sub device. After the sub device is switched, the main device 101 may perform wireless communication with the first STA through the second sub device. After the main device 101 determines to perform wireless communication with the first STA through the second sub device, the main device 101 transmits the second downlink optical signal to the second sub device. The second sub device is configured to obtain a fourth downlink electrical signal based on the second downlink optical signal. The second sub device is further configured to obtain a second downlink wireless signal based on the fourth downlink electrical signal, and send the second downlink wireless signal to the first STA.

After the sub device is switched, when the first sub device is also in the wireless communication range of the first STA, the first sub device can also receive the uplink wireless signal from the first STA. The first sub device is configured to transmit an uplink optical signal to the main device 101 through an optical fiber. The main device 101 is further configured to receive the uplink optical signal from the first sub device, and convert the uplink optical signal into an uplink electrical signal. When the main device 101 performs wireless communication with the first STA through the second sub device, the main device 101 may discard the uplink electrical signal received from the first sub device.

It can be learned from the foregoing description that the sub device 103 may not include a MAC layer processing unit or a physical layer processing unit. Therefore, the sub device 103 may not be capable of buffering downlink buffer data of the first STA at the MAC layer or the physical layer. Therefore, the main device 101 may buffer the downlink buffer data of the first STA. For example, the second downlink electrical signal transmitted by the main device 101 through the second sub device is downlink buffer data.

It can be learned from the foregoing description that the main device 101 may switch the sub device that performs wireless communication with the first STA. The main device 101 may switch, in the following manner, the sub device that performs wireless communication with the first STA. The first sub device and the second sub device are configured to receive the uplink wireless signal, for example, the first uplink wireless signal, from the first STA. The first sub device and the second sub device are further configured to convert the uplink wireless signal into an uplink electrical signal, convert the uplink electrical signal into an uplink optical signal, and transmit the uplink optical signal to the main device 101. The main device 101 is further configured to obtain first signal quality between the first sub device and the first STA based on the uplink optical signal uploaded by the first sub device, and obtain second signal quality between the second sub device and the first STA based on the uplink optical signal uploaded by the second sub device. For example, the main device 101 is configured to restore the uplink optical signal to a Wi-Fi physical layer signal, and then obtain signal quality based on the Wi-Fi physical layer signal. The main device 101 is configured to determine, based on the first signal quality and the second signal quality, a sub device with which the first STA performs wireless communication. For example, if the first signal quality is better than or equal to the second signal quality, the main device 101 determines that the first STA performs wireless communication with the first sub device. If the second signal quality is better than the first signal quality, the main device 101 determines that the first STA performs wireless communication with the second sub device.

It should be understood that in the foregoing example, only an example in which the first sub device is the sub device 103 is used for description. In actual application, for descriptions of another sub device, refer to descriptions of the sub device 103. When the another sub device also moves related processing of the physical layer and/or related processing of the MAC layer up to the main device 101, costs of the another sub device can be reduced, so that costs of the optical communication system are reduced. The related processing of the physical layer includes uplink related processing of the physical layer and/or downlink related processing of the physical layer. The related processing of the MAC layer includes uplink related processing of the MAC layer and/or downlink related processing of the MAC layer.

In actual application, the main device 101 may also be associated with a STA through a wireless module. To reduce costs of the main device 101, the wireless module may include the MAC layer processing unit and/or the physical layer processing unit of the main device 101 in FIG. 2 to FIG. 5.1. For example, the wireless module includes the MAC layer processing unit 302 and the physical layer processing unit 402. It is assumed that the main device 101 is associated with a target STA, in this case, the wireless module may be configured to process an uplink electrical signal of the first STA, and may be configured to process an uplink electrical signal of the target STA.

In this embodiment of this application, the plurality of sub devices are connected to the main device 101 through the optical splitter 102. To avoid a conflict between a plurality of uplink optical signals, the main device 101 may allocate respective uplink slots to the sub devices. The uplink slot includes start time and duration. A process of allocating the slots may also be referred to as bandwidth allocation. Each sub device sends an uplink optical signal in a specified slot. For example, the main device 101 allocates a first uplink slot to the first sub device. The first sub device transmits the first uplink optical signal to the main device 101 in the first uplink slot. The main device 101 allocates a second uplink slot to the second sub device. The second sub device transmits the second uplink optical signal to the main device 101 in the second uplink slot. The main device 101 may allocate the uplink slots to the sub devices in any one of the following manners.

In a first manner, the main device 101 divides an optical slot into an uplink slot and a downlink slot. The main device 101 allocates the uplink slot into a plurality of sub devices. The main device 101 obtains a plurality of frequency bandwidths. The plurality of frequency bandwidths are in one-to-one correspondence with the plurality of sub devices. Each frequency bandwidth indicates a communication frequency bandwidth between a sub device and a STA. The main device 101 allocates respective bandwidths to the plurality of sub devices based on the plurality of frequency bandwidths. The main device 101 calculates allocated duration based on the allocated bandwidth. The main device 101 may allocate start time to an uplink slot according to any rule.

In a second manner, the main device 101 obtains buffer information in one-to-one correspondence with the sub devices. Each piece of buffer information includes uplink buffer information and/or downlink buffer information. For example, the main device 101 obtains first buffer information corresponding to the first sub device. The first buffer information includes first uplink buffer information and/or first downlink buffer information. The first uplink buffer information indicates a size of to-be-uploaded data of the first STA. The first downlink buffer information represents a size of downlink data to be sent to the first STA by the main device 101 or the first sub device. The main device 101 allocates an optical slot to the plurality of sub devices based on the plurality of pieces of buffer information. The optical slot includes an uplink slot and/or a downlink slot.

In this embodiment of this application, the sub device 103 may not include a MAC layer processing unit. The MAC layer processing unit is related to a function of air interface contention. As a result, absence of the MAC layer processing unit is not conducive to performing air interface contention by the sub device 103. Therefore, in this embodiment of this application, the main device 101 may perform air interface scheduling for the plurality of sub devices. Descriptions are provided below by using an example.

The main device 101 obtains a plurality of pieces of buffer information. The plurality of sub devices are in one-to-one correspondence with the plurality of pieces of buffer information. Each piece of buffer information includes uplink buffer information and/or downlink buffer information. For example, the main device 101 obtains first buffer information corresponding to the first sub device. The first buffer information includes first uplink buffer information and/or first downlink buffer information. The first uplink buffer information indicates a size of to-be-uploaded data of the first STA. The first downlink buffer information represents a size of downlink data to be sent to the first STA by the main device 101. The main device 101 allocates air interface transmission time periods to the plurality of sub devices based on the plurality of pieces of buffer information. For example, the main device 101 allocates a first time period to the first sub device. The main device 101 allocates a second time period to the second sub device. The main device 101 may send a plurality of pieces of scheduling information to the plurality of sub devices. Each piece of scheduling information includes information about a corresponding time period. For example, the main device 101 sends first scheduling information to the first sub device, where the first scheduling information includes information about the first time period. The first sub device performs air interface transmission in the first time period based on the first scheduling information.

The first time period includes an uplink time period and/or a downlink time period. When the first time period includes the uplink time period, the first sub device sends a first downlink wireless signal to the first STA in the uplink time period. When the first time period includes the uplink time period, the first access device sends a trigger frame (trigger frame) to the first STA. The trigger frame is used to allocate an uplink slot for wireless transmission to the first STA, and indicates the first STA to upload a first uplink wireless signal in the uplink time period. When the first time period includes the uplink time period and the downlink time period, the uplink time period is used by the first STA to upload a first uplink wireless signal, and the downlink time period is used by the first sub device to send a first downlink wireless signal to the first STA.

It should be understood that, in actual application, the main device 101 may not need to send the scheduling information to the sub device. For example, in this embodiment of this application, after the sub device receives a downlink optical signal from the main device 101, the sub device immediately converts the downlink optical signal into a downlink electrical signal, and converts the downlink electrical signal into a downlink wireless signal by using a radio frequency unit. Therefore, a start moment of the downlink time period may be determined based on a transmission end moment of the downlink optical signal, and transmission duration of the downlink time period may be determined based on transmission duration of the downlink optical signal, bandwidth of the optical slot, and bandwidth of wireless communication. Therefore, the main device 101 may allocate the downlink time period by allocating the downlink slot in the optical slot. Similarly, the main device 101 may send the trigger frame to the STA through the sub device. After receiving the trigger frame, the sub device immediately sends the trigger frame to the STA. The trigger frame is used to allocate an uplink slot for wireless transmission, that is, an uplink time period, to the STA. Therefore, the main device 101 may allocate the uplink time period by using the trigger frame. In this embodiment of this application, the second time period may include an uplink time period. Therefore, the first sub device may send a silence instruction to the first STA. The first STA is in a silent state based on the silence instruction. The silent state means that even if the first STA includes uplink buffer data to be sent to the first sub device, the first STA does not obtain an air interface transmission opportunity through air interface contention. The first STA uploads the first uplink buffer information to wait for the first sub device to send the trigger frame, and obtains an air interface transmission opportunity by using the trigger frame.

In this embodiment of this application, the sub device 103 may alternatively include a MAC layer processing unit. Therefore, the sub device 103 may meet an air interface contention condition. In this case, the main device 101 may also perform air interface scheduling for the plurality of sub devices. Descriptions are provided below by using an example.

The main device 101 obtains a plurality of pieces of buffer information. The plurality of sub devices are in one-to-one correspondence with the plurality of pieces of buffer information. The main device 101 determines an air interface transmission sequence of the plurality of sub devices based on the plurality of pieces of buffer information. The main device 101 sequentially sends control instructions to the plurality of sub devices based on the air interface transmission sequence. For example, the main device 101 first sends a first control instruction to the first sub device. The first sub device is configured to perform air interface contention based on the first control instruction, and perform air interface transmission after the air interface contention succeeds. The air interface transmission may include uplink air interface transmission and/or downlink air interface transmission. For descriptions of the uplink air interface transmission and/or the downlink air interface transmission, refer to the descriptions of the uplink time period and/or the downlink time period. After the air interface contention succeeds, the first sub device is further configured to send a first reply frame to the main device. Based on the first reply frame, the main device 101 is further configured to send a second control instruction to a second sub device based on the air interface transmission sequence. The second sub device is configured to perform air interface contention based on the second control instruction, and perform air interface transmission after the air interface contention succeeds. Similarly, the second sub device sends a second reply frame to the main device 101 after the air interface contention succeeds. The main device 101 sends a control instruction to a next sub device based on the second reply frame.

In actual application, the main device 101 may also be associated with the STA. Therefore, in the foregoing solution in which the main device 101 performs air interface scheduling for the plurality of sub devices, the main device 101 may further obtain buffer information of the main device 101. The main device 101 determines an air interface transmission sequence of the main device 101 and the plurality of sub devices based on the plurality of pieces of buffer information and the buffer information of the main device 101, or the main device 101 allocates air interface transmission time periods to the main device 101 and the plurality of sub devices based on the plurality of pieces of buffer information and the buffer information of the main device 101.

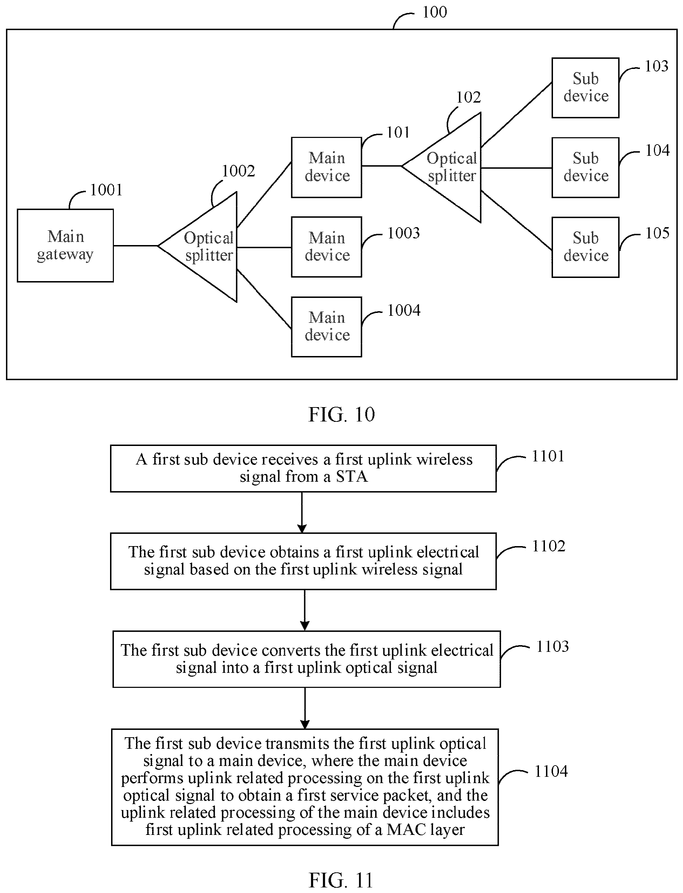

FIG. 10 is a sixth diagram of a structure of a communication system according to an embodiment of this application. As shown in FIG. 10, based on FIG. 1, the communication system 100 further includes a main gateway 1001, an optical splitter 1002, a main device 1003, and a main device 1004. The main gateway 1001 may be an OLT. The main gateway 1001 is connected to a plurality of main devices through the optical splitter 1002. In an example in FIG. 10, the plurality of main devices include a main device 101, the main device 1003, and the main device 1004. The main device may be an ONU or an ONT. In an uplink direction, uplink optical signals from the main devices are coupled to the main gateway 1001 through the optical splitter 1002 in a time division manner. In a downlink direction, the main gateway 1001 allocates downlink optical signals to all the main devices through the optical splitter 1002.

The foregoing describes the optical communication system provided in this application. The following describes the optical communication method provided in this application. FIG. 11 is a first schematic flowchart of an optical communication method according to an embodiment of this application. As shown in FIG. 11, the optical communication method includes the following steps.

In step 1101, a first sub device receives a first uplink wireless signal from a STA.

In step 1102, the first sub device obtains a first uplink electrical signal based on the first uplink wireless signal.

A sub device may also be referred to as a sub gateway or an AP. In a PON system, the sub device may be referred to as a sub ONU or a sub ONT. In an FTTR scenario, the sub device may be referred to as a sub SFU or a sub FTTR. The first sub device includes a wireless module. The wireless module includes a radio frequency unit. The first sub device receives the first uplink wireless signal from the first STA through the radio frequency unit, and obtains the first uplink electrical signal based on the first uplink wireless signal.

In step 1103, the first sub device converts the first uplink electrical signal into a first uplink optical signal.

In step 1104, the first sub device transmits the first uplink optical signal to a main device, where the main device performs uplink related processing on the first uplink optical signal to obtain a first service packet, and the uplink related processing of the main device includes first uplink related processing of a MAC layer.

In the PON system, the main device 101 may be referred to as a main ONU or a main ONT. In the FTTR scenario, the main device may be referred to as a main MFU or a main FTTR. The main device includes a photoelectric conversion unit and a MAC layer processing unit. The photoelectric conversion unit is configured to convert the first uplink optical signal into the first uplink electrical signal. The MAC layer processing unit may be a MAC chip. The MAC layer processing unit is configured to perform first uplink related processing of the MAC layer on the first uplink electrical signal, to obtain the first service packet.

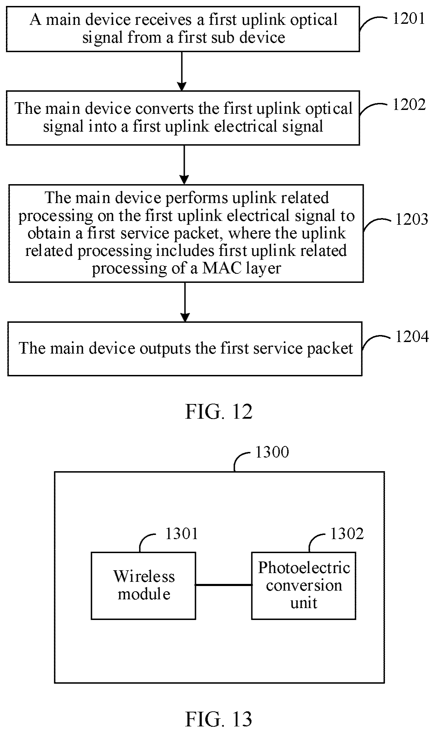

FIG. 12 is a second schematic flowchart of an optical communication method according to an embodiment of this application. As shown in FIG. 12, the optical communication method includes the following steps.

In step 1201, a main device receives a first uplink optical signal from a first sub device.

In step 1202, the main device converts the first uplink optical signal into a first uplink electrical signal.

The main device is connected to the first sub device through an optical fiber. The main device receives the first uplink optical signal from the first sub device through the optical fiber. The first uplink optical signal is obtained based on a first uplink wireless signal sent by a first STA. The main device includes an optical module. The optical module is configured to convert the first uplink optical signal into the first uplink electrical signal.

In step 1203, the main device performs uplink related processing on the first uplink electrical signal to obtain a first service packet, where the uplink related processing includes first uplink related processing of a MAC layer.

In step 1204, the main device outputs the first service packet.

The main device further includes a MAC layer processing unit. The MAC layer processing unit may be a MAC chip. The MAC layer processing unit is configured to perform the first uplink related processing of the MAC layer on the first uplink electrical signal, to obtain the first service packet. The main device outputs the first service packet. For example, the main device is a main ONU. The main device further includes another optical module. The another optical module is configured to convert the first service packet into a third uplink optical signal, and transmit the third uplink optical signal to an OLT. The OLT is configured to send the third uplink optical signal to a public network.

It should be understood that the descriptions of the optical communication method in FIG. 11 and FIG. 12 are similar to the descriptions of the optical communication system in FIG. 1 to FIG. 10. Therefore, for the descriptions of the optical communication method, refer to the descriptions of the optical communication system in FIG. 1 to FIG. 10. For example, the first uplink related processing of the MAC layer includes A-MSDU parsing. For another example, the MAC layer processing unit is further configured to perform second uplink related processing of the MAC layer on the first uplink electrical signal. For another example, the main device is further configured to receive a second service packet, and perform first downlink related processing of the MAC layer on the second service packet, to obtain a first downlink electrical signal.

FIG. 13 is a diagram of a structure of a first sub device according to an embodiment of this application. As shown in FIG. 13, the first sub device 1300 includes a wireless module 1301 and a photoelectric conversion unit 1302. The wireless module 1301 is configured to receive a first uplink wireless signal from a STA, and obtain a first uplink electrical signal based on the first uplink wireless signal. The photoelectric conversion unit 1302 is configured to convert the first uplink electrical signal into a first uplink optical signal, and transmit the first uplink optical signal to a main device. The main device performs uplink related processing on the first uplink optical signal to obtain a first service packet.

It should be understood that descriptions of the first sub device 1300 in FIG. 13 are similar to the descriptions of the optical communication system in FIG. 1 to FIG. 10. The wireless module 1301 may be the wireless module 201 in FIG. 2, the wireless module 301 in FIG. 3, the wireless module 401 in FIG. 4, or the wireless module 501 in FIG. 5. The photoelectric conversion unit 1302 may be the photoelectric conversion unit 202 in FIG. 2 to FIG. 5. Therefore, for the descriptions of the first sub device, refer to the descriptions of the optical communication system in FIG. 1 to FIG. 10. For example, the wireless module 1301 includes a radio frequency unit and a physical layer processing unit. The radio frequency unit is configured to convert the first uplink wireless signal into an electrical signal. The physical layer processing unit is configured to perform uplink related processing of a physical layer on the electrical signal, to obtain the first uplink electrical signal. For another example, the photoelectric conversion unit 1302 is further configured to receive a first downlink optical signal from the main device, and convert the first downlink optical signal into a first downlink electrical signal.

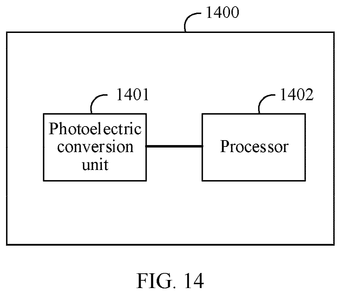

FIG. 14 is a diagram of a structure of a main device according to an embodiment of this application. As shown in FIG. 14, the main device 1400 includes a photoelectric conversion unit 1401 and a processor 1402. The photoelectric conversion unit 1401 is configured to receive a first uplink optical signal from a first sub device, and convert the first uplink optical signal into a first uplink electrical signal. The processor 1402 may be a central processing unit (central processing unit, CPU), a network processor (network processor, NP), or a combination of a CPU and an NP. The processor 1402 may further include a hardware chip or another general-purpose processor. The hardware chip may be an application-specific integrated circuit (application-specific integrated circuit, ASIC), a programmable logic device (programmable logic device, PLD), or a combination thereof. The processor 1402 is configured to perform first uplink related processing of a MAC layer on the first uplink electrical signal, to obtain a first service packet. The processor 1402 is further configured to output the first service packet.

It should be understood that descriptions of the main device 1400 in FIG. 14 are similar to descriptions of the optical communication system in FIG. 1 to FIG. 10. The processor 1402 may be the processor 220 in FIG. 2, the processor 320 in FIG. 3, the processor 420 in FIG. 4, or the processor 520 in FIG. 5. The photoelectric conversion unit 1401 may be the photoelectric conversion unit 203 in FIG. 2 to FIG. 5. Therefore, for the descriptions of the main device, refer to the descriptions of the optical communication system in FIG. 1 to FIG. 10. For example, the processor 1402 is a MAC layer processing unit. The processor 1402 is further configured to perform second uplink related processing of the MAC layer on the first uplink electrical signal. For another example, the photoelectric conversion unit 1401 is further configured to receive a second service packet, and perform first downlink related processing of the MAC layer on the second service packet, to obtain a first downlink electrical signal.

In another embodiment, the first sub device 1300 and/or the main device 1400 may further include a memory. The memory may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), a flash memory, or the like. The volatile memory may be a random access memory (random access memory, RAM). The memory may be configured to store the first uplink electrical signal.

The foregoing descriptions are merely specific implementations of this application, but are not intended to limit the protection scope of this application. Any variation or replacement readily figured out by a person skilled in the art within the technical scope disclosed in this application shall fall within the protection scope of this application.

## Claims

1. An optical communication method, comprising:
receiving, by a main device, a first uplink optical signal from a first sub device;
converting, by the main device, the first uplink optical signal into a first uplink electrical signal;
performing, by the main device, uplink related processing on the first uplink electrical signal to obtain a first service packet, wherein the uplink related processing comprises first uplink related processing of a medium access control MAC layer; and
outputting, by the main device, the first service packet.

2. The optical communication method according to claim 1, wherein the first uplink electrical signal is a digital in-phase/quadrature I/Q signal; and
the uplink related processing performed by the main device on the first uplink electrical signal further comprises second uplink related processing of a physical layer, first uplink related processing of the physical layer, and second uplink related processing of the MAC layer.

3. The optical communication method according to claim 1, wherein
the uplink related processing performed by the main device on the first uplink electrical signal further comprises first uplink related processing of a physical layer and second uplink related processing of the MAC layer.

4. The optical communication method according to claim 1, wherein
the uplink related processing performed by the main device on the first uplink electrical signal further comprises second uplink related processing of the MAC layer.

5. The optical communication method according to claim 4, wherein the method further comprises:
sending, by the main device, incremental signaling to the first sub device, wherein the incremental signaling comprises a frame identifier and information about a variable field, the frame identifier is used by the first sub device to obtain a first fixed field set based on a first mapping relationship, the first mapping relationship comprises a mapping relationship between a plurality of frame identifiers and a plurality of fixed field sets, and the variable field is used by the first sub device to obtain a first control frame based on the variable field and the first fixed field set.

6. The optical communication method according to any one of claims 1 to 5, wherein the method further comprises:
performing, by the main device, downlink related processing on a second service packet to obtain a first downlink electrical signal, wherein the downlink related processing comprises first downlink related processing of the MAC layer;
converting, by the main device, the first downlink electrical signal into a first downlink optical signal; and
transmitting, by the main device, the first downlink optical signal to the first sub device.

7. The optical communication method according to claim 6, wherein
the downlink related processing performed by the main device on the second service packet further comprises second downlink related processing of the MAC layer, first downlink related processing of the physical layer, and second downlink related processing of the physical layer.

8. The optical communication method according to claim 6, wherein
the downlink related processing performed by the main device on the second service packet further comprises second downlink related processing of the MAC layer and first downlink related processing of the physical layer.

9. The optical communication method according to claim 6, wherein
the downlink related processing performed by the main device on the second service packet further comprises second downlink related processing of the MAC layer.

10. The optical communication method according to any one of claims 6 to 9, wherein the main device is connected to a second sub device through an optical splitter.

11. The optical communication method according to claim 10, wherein the method further comprises:
receiving, by the main device, a second uplink optical signal from the second sub device;
converting, by the main device, the second uplink optical signal into a second uplink electrical signal; and
performing, by the main device, the uplink related processing on the second uplink electrical signal to obtain a third service packet.

12. The optical communication method according to claim 10 or 11, wherein the method further comprises:
receiving, by the main device, a fourth service packet;
performing, by the main device, the downlink related processing on the fourth service packet to obtain a second downlink electrical signal; and
converting, by the main device, the second downlink electrical signal into a second downlink optical signal, and transmitting the second downlink optical signal to the second sub device.

13. The optical communication method according to any one of claims 10 to 12, wherein the method further comprises:
allocating, by the main device, a first uplink slot to the first sub device, and allocating a second uplink slot to the second sub device, wherein the first uplink slot is different from the second uplink slot;
receiving, by the main device, the first uplink optical signal from the first sub device comprises: receiving, by the main device, the first uplink optical signal from the first sub device in the first uplink slot; and
receiving, by the main device, the second uplink optical signal from the second sub device comprises: receiving, by the main device, the second uplink optical signal from the second sub device in the second uplink slot.

14. An optical communication method, comprising:
receiving, by a first sub device, a first uplink wireless signal from a station STA;
obtaining, by the first sub device, a first uplink electrical signal based on the first uplink wireless signal;
converting, by the first sub device, the first uplink electrical signal into a first uplink optical signal; and
transmitting, by the first sub device, the first uplink optical signal to a main device, wherein the main device performs uplink related processing on the first uplink optical signal to obtain a first service packet, and the uplink related processing of the main device comprises first uplink related processing of a medium access control MAC layer.

15. The optical communication method according to claim 14, wherein the first uplink electrical signal is a digital in-phase/quadrature I/Q signal.

16. The optical communication method according to claim 14 or 15, wherein the first uplink related processing of the MAC layer comprises one or more of the following: aggregation-MAC protocol data unit A-MPDU parsing, cyclic redundancy check CRC, ACK, block acknowledgment BA, and aggregation-MAC service data unit A-MSDU parsing.

17. The optical communication method according to claim 14, wherein
obtaining, by the first sub device, the first uplink electrical signal based on the first uplink wireless signal comprises: converting, by the first sub device, the first uplink wireless signal into an electrical signal, and performing second uplink related processing of a physical layer on the electrical signal, to obtain the first uplink electrical signal.

18. The optical communication method according to claim 17, wherein the second uplink related processing of the physical layer comprises at least one of uplink related processing of the physical layer, and the uplink related processing of the physical layer comprises synchronization, fast Fourier transform FFT, constellation mapping, descrambling, and restoring a medium access control protocol data unit MPDU.

19. The optical communication method according to claim 14, wherein
obtaining, by the first sub device, the first uplink electrical signal based on the first uplink wireless signal comprises: converting, by the first sub device, the first uplink wireless signal into an electrical signal, and performing second uplink related processing of a physical layer and first uplink related processing of the physical layer on the electrical signal in sequence, to obtain the first uplink electrical signal.

20. The optical communication method according to claim 19, wherein
the first uplink related processing of the physical layer comprises a first subset of uplink related processing of the physical layer, the second uplink related processing of the physical layer comprises a second subset of the uplink related processing of the physical layer, the uplink related processing of the physical layer comprises synchronization, fast Fourier transform FFT, constellation mapping, descrambling, and restoring a medium access control protocol data unit MPDU, and the first subset is different from the second subset.

21. The optical communication method according to claim 14, wherein
obtaining, by the first sub device, the first uplink electrical signal based on the first uplink wireless signal comprises: converting, by the first sub device, the first uplink wireless signal into an electrical signal, and performing second uplink related processing of a physical layer, first uplink related processing of the physical layer, and second uplink related processing of the MAC layer on the electrical signal in sequence, to obtain the first uplink electrical signal.

22. The optical communication method according to claim 21, wherein the first uplink related processing of the MAC layer comprises a first subset of uplink related processing of the MAC layer, the second uplink related processing of the MAC layer comprises a second subset of the uplink related processing of the MAC layer, the uplink related processing of the MAC layer comprises aggregation-MAC protocol data unit A-MPDU parsing, cyclic redundancy check CRC, ACK or block acknowledgment BA, and aggregation-MAC service data unit A-MSDU parsing, and the first subset is different from the second subset.

23. The optical communication method according to any one of claims 19 to 22, wherein the method further comprises:
receiving, by the first sub device, incremental signaling from the main device, wherein the incremental signaling comprises a frame identifier and information about a variable field;
obtaining, by the first sub device, a first fixed field set based on the frame identifier and a first mapping relationship, wherein the first mapping relationship comprises a mapping relationship between a plurality of frame identifiers and a plurality of fixed field sets;
obtaining, by the first sub device, a first control frame based on the variable field and the first fixed field set; and
sending, by the first sub device, the first control frame to the STA.

24. The optical communication method according to claim 23, wherein a frame format of the first control frame complies with a specification in the 802.11 protocol.

25. The optical communication method according to claim 23 or 24, wherein
the first control frame is an acknowledgment ACK frame, and the frame identifier indicates that a type of the first control frame is the ACK frame;
the information about the variable field comprises at least one of the following information: information about a duration field, a destination address field, a frame check sequence field, a more fragments flag field, a retry flag, and an extension field; and
the first fixed field set comprises at least one of the following information: information about a to distributed system flag, a from distributed system flag, a power management flag, and a protected field.

26. The optical communication method according to any one of claims 14 to 25, wherein the method further comprises:
receiving, by the first sub device, a first downlink optical signal from the main device;
converting, by the first sub device, the first downlink optical signal into a first downlink electrical signal, wherein the first downlink electrical signal is obtained after the main device performs downlink related processing on a second service packet, and the downlink related processing comprises first downlink related processing of the MAC layer;
obtaining, by the first sub device, a first downlink wireless signal based on the first downlink electrical signal; and
sending, by the first sub device, the first downlink wireless signal to the STA.

27. The optical communication method according to claim 26, wherein
obtaining, by the first sub device, the first downlink wireless signal based on the first downlink electrical signal comprises: performing, by the first sub device, second downlink related processing of the physical layer on the first downlink electrical signal, and obtaining the first downlink wireless signal based on a processed electrical signal.

28. The optical communication method according to claim 26, wherein
obtaining, by the first sub device, the first downlink wireless signal based on the first downlink electrical signal comprises: performing, by the first sub device, first downlink related processing of the physical layer and second downlink related processing of the physical layer on the first downlink electrical signal in sequence, and obtaining the first downlink wireless signal based on a processed electrical signal.

29. The optical communication method according to claim 26, wherein
obtaining, by the first sub device, the first downlink wireless signal based on the first downlink electrical signal comprises: performing, by the first sub device, second downlink related processing of the MAC layer, first downlink related processing of the physical layer, and second downlink related processing of the physical layer on the first downlink electrical signal in sequence, and obtaining the first downlink wireless signal based on a processed electrical signal.

30. A main device, comprising a photoelectric conversion unit and a processor, wherein
the photoelectric conversion unit is configured to receive a first uplink optical signal from a first sub device, and convert the first uplink optical signal into a first uplink electrical signal;
the processor is configured to perform uplink related processing on the first uplink electrical signal to obtain a first service packet, wherein the uplink related processing comprises first uplink related processing of a medium access control MAC layer; and
the processor is further configured to output the first service packet.

31. The main device according to claim 30, wherein the first uplink electrical signal is a digital in-phase/quadrature I/Q signal; and
the uplink related processing performed by the main device on the first uplink electrical signal further comprises second uplink related processing of a physical layer, first uplink related processing of the physical layer, and second uplink related processing of the MAC layer.

32. The main device according to claim 30, wherein
the uplink related processing performed by the main device on the first uplink electrical signal further comprises first uplink related processing of a physical layer and second uplink related processing of the MAC layer.

33. The main device according to claim 30, wherein
the uplink related processing performed by the main device on the first uplink electrical signal further comprises second uplink related processing of the MAC layer.

34. The main device according to claim 33, wherein
the photoelectric conversion unit is further configured to send incremental signaling to the first sub device, wherein the incremental signaling comprises a frame identifier and information about a variable field, the frame identifier is used by the first sub device to obtain a first fixed field set based on a first mapping relationship, the first mapping relationship comprises a mapping relationship between a plurality of frame identifiers and a plurality of fixed field sets, and the variable field is used by the first sub device to obtain a first control frame based on the variable field and the first fixed field set.

35. The main device according to any one of claims 30 to 34, wherein
the processor is further configured to perform downlink related processing on a second service packet to obtain a first downlink electrical signal, wherein the downlink related processing comprises first downlink related processing of the MAC layer; and
the photoelectric conversion unit is further configured to convert the first downlink electrical signal into a first downlink optical signal, and transmit the first downlink optical signal to the first sub device.

36. A sub device, comprising a wireless module and a photoelectric conversion unit, wherein
the wireless module is configured to receive a first uplink wireless signal from a station STA, and obtain a first uplink electrical signal based on the first uplink wireless signal; and
the photoelectric conversion unit is configured to convert the first uplink electrical signal into a first uplink optical signal, and transmit the first uplink optical signal to a main device, wherein the main device performs uplink related processing on the first uplink optical signal to obtain a first service packet, and the uplink related processing of the main device comprises first uplink related processing of a medium access control MAC layer.

37. The sub device according to claim 36, wherein the first uplink electrical signal is a digital in-phase/quadrature I/Q signal.

38. The sub device according to claim 36, wherein
that the wireless module is configured to obtain the first uplink electrical signal based on the first uplink wireless signal comprises: the wireless module is configured to convert the first uplink wireless signal into an electrical signal, and perform second uplink related processing of a physical layer on the electrical signal, to obtain the first uplink electrical signal.

39. The sub device according to claim 36, wherein
that the wireless module is configured to obtain the first uplink electrical signal based on the first uplink wireless signal comprises: the wireless module is configured to convert the first uplink wireless signal into an electrical signal, and perform second uplink related processing of a physical layer and first uplink related processing of the physical layer on the electrical signal in sequence, to obtain the first uplink electrical signal.

40. The sub device according to claim 36, wherein
that the wireless module is configured to obtain the first uplink electrical signal based on the first uplink wireless signal comprises: the wireless module is configured to convert the first uplink wireless signal into an electrical signal, and perform second uplink related processing of a physical layer, first uplink related processing of the physical layer, and second uplink related processing of the MAC layer on the electrical signal in sequence, to obtain the first uplink electrical signal.
